# EUROPÄISCHE PATENTSCHRIFT

(11) **EP 3 765 962 B1**
(45) Veröffentlichungstag und Bekanntmachung des Hinweises auf die Patenterteilung: **30.04.2025**
(21) Anmeldenummer: 18711288.3
(22) Anmeldetag: 12.03.2018
(51) Int. Cl.: G06F 11/34, G06F 11/07, G06F 11/30

(54) **VERFAHREN ZUR BEHEBUNG VON PROZESSANOMALIEN**
METHOD FOR ELIMINATING PROCESS ANOMALIES
PROCÉDÉ D'ÉLIMINATION D'ANOMALIES DE PROCESSUS

(43) Veröffentlichungstag der Anmeldung: 20.01.2021
(73) Patentinhaber: Celonis SE, 80333 München (DE)
(72) Erfinder: RINKE, Alexander, 80333 München (DE); KLENK, Martin, 80639 München (DE)
(74) Vertreter: 2s-ip Schramm Schneider Bertagnoll Patent- und Rechtsanwälte Part mbB
(86) Internationale Anmeldenummer: PCT/EP2018/056066
(87) Internationale Veröffentlichungsnummer: WO 2019/174709

(56) Entgegenhaltungen:
- DE-A1- 102004 046 611
- US-A1- 2016 110 277
- US-A1- 2017 102 997
- "Policy Technologies for Self-Managing Systems", 1 September 2008, IBM PRESS, article DAKSHI AGRAWAL ET AL: "Policy Technologies for Self-Managing Systems", pages: 139 - 145, XP055520929

## Beschreibung

### Gebiet der Erfindung

Die Erfindung betrifft ein Verfahren zur Überwachung von sich in Ausführung befindlichen Prozessinstanzen und zur Behebung von Prozessanomalien in diesen Prozessinstanzen.

### Hintergrund der Erfindung

Immer mehr Unternehmen setzen Verfahren ein, um Ist-Prozesse zu analysieren. Die zu analysierenden Prozesse können in einem Computersystem, mit Hilfe eines Computersystems oder außerhalb eines Computersystems ausgeführt worden sein. Bei den außerhalb eines Computersystems ausgeführten Prozessen kann es sich um technische Prozesse, etwa um Montageprozesse, Herstellungsprozesse oder dergleichen handeln.

Ein ausgeführter Prozess wird als Prozessinstanz eines bestimmten Prozesses bezeichnet. Eine Prozessinstanz kann hierbei mehrere Prozessschritte umfassen. Jeder Prozessschritt erzeugt in der Regel Daten, die in einem Computersystem gespeichert werden. Beispielsweise kann in dem Computersystem gespeichert werden, wer wann welchen Prozessschritt eines Bestellprozesses ausgeführt hat. Für einen Montageprozess kann beispielsweise gespeichert werden, wann welcher Montageschritt mit welchen Parametern (z.B. das Drehmoment beim Befestigen von Schrauben) bei der Montage eines Fahrzeuges ausgeführt wurde - die Daten hierzu können z.B. von Messwertgebern bereitgestellt werden.

Aus diesen gespeicherten Daten können Informationen extrahiert werden, die für die Analyse der Prozesse relevant sind.

Bei diesen Analysen handelt es sich um rückwärtsgewandte bzw. retrospektive Analysen von bereits ausgeführten Prozessinstanzen, die Informationen über Schwächen der jeweiligen Prozesse liefern können. Allerdings ist ein proaktives Eingreifen in die Prozessinstanzen zur Steuerung fehlerhafter Prozessinstanzen nicht möglich, da die fehlerhaften Prozessinstanzen bereits ausgeführt wurden und Fehler in einzelnen Prozessinstanzen daher erst nach deren Ausführung entdeckt werden können. So kann beispielsweise für einen Montageprozess eines Fahrzeuges erst nach Abschluss des Montageprozesses festgestellt werden, dass die Montage dieses Fahrzeuges eine vorbestimmte Montagedauer überschritten hat. Mit den aus dem Stand der Technik bekannten Verfahren ist es allenfalls möglich, anhand der Analyse bereits ausgeführter Prozessinstanzen Verbesserungen an zukünftig auszuführenden Prozessinstanzen vorzunehmen. Fehler oder Anomalien - die trotz Verbesserungen des Prozesses auftreten können - in sich in Ausführung befindlichen Prozessinstanzen können aber nicht erkannt oder gar behoben werden.

Die Offenbarung in US2016110277 betrifft das Loggen von Ausführungszeiten periodischer Jobs. Es wird eine statistische Analyse zur Feststellung von Anomalien und Inkonsistenzen durchgeführt. Bei Überschreitung eines Schwellwertes wird ein Korrektiv ausgeführt.

### Aufgabe der Erfindung

Aufgabe der Erfindung ist es daher, Lösungen bereitzustellen, die es ermöglichen, Fehler bzw. Anomalien bereits während der Ausführung der Prozessinstanzen zu erkennen und zu beheben.

### Erfindungsgemäße Lösung

Diese Aufgabe wird erfindungsgemäß durch ein Verfahren nach dem unabhängigen Anspruch gelöst. Vorteilhafte Ausgestaltungen und Weiterbildungen der Erfindung sind in den abhängigen Ansprüchen angegeben.

Bereit gestellt wird demnach in Verfahren zur Überwachung von sich in Ausführung befindlichen Prozessinstanzen und zur Behebung von Prozessanomalien in diesen Prozessinstanzen, wobei jede Prozessinstanz eine Anzahl von Prozessschritte umfasst, wobei für die bereits ausgeführten Prozessschritte der Prozessinstanzen Prozessdaten in zumindest einem Prozessprotokoll gespeichert werden, wobei die Prozessdaten für jeden Prozessschritt zumindest
- eine Kennung des Prozessschrittes,
- eine Kennung, mit der der Prozessschritt eindeutig einer Prozessinstanz zuordenbar ist, und
- eine Reihenfolge des Prozessschrittes innerhalb der Prozessinstanz umfassen, wobei eine Prozessanomalie mit zumindest einer Sensordefinition beschrieben wird, wobei einer Prozessanomalie eine Menge von generischen Aktionen zur Behebung der Prozessanomalie zugeordnet ist, wobei
   (a) in einem Überwachungsschritt ein Sensor unter Verwendung der Sensordefinition das Prozessprotokoll hinsichtlich der in der Sensordefinition beschriebenen Prozessanomalie überwacht und Prozessinstanzen oder mehrere Prozessinstanzen umfassende Prozesse detektiert, die die in der Sensordefinition beschriebenen Prozessanomalie aufweisen, und
   (b) in einem Korrekturschritt für eine in dem Überwachungsschritt detektierte Prozessinstanz die Prozessanomalie zur Laufzeit dieser Prozessinstanz behoben wird, wobei
      - aus der der Prozessanomalie zugeordneten Menge von generischen Aktionen zumindest eine generische Aktion ausgewählt wird,
      - basierend auf der ausgewählten generischen Aktion eine für den detektierten Prozess bzw. eine für die detektierte Prozessinstanz spezifische Prozesseingriffsinstanz erzeugt wird, und
      - die Prozesseingriffsinstanz zur Behebung der Prozessanomalie der detektierten Prozessinstanz oder des detektierten Prozesses zur Ausführung gebracht wird.

Eine Prozessanomalie ist ein Fehler in einer sich in Ausführung befindlichen Prozessinstanz. Eine Prozessanomalie kann aber auch eine Abweichung einer Prozessinstanz von einem vorgegebenen Sollwert sein, wobei die Abweichung nicht unbedingt ein Fehler sein muss, etwa wenn ein Drehmoment, mit dem eine Schraube befestigt wird ein Soll-Drehmoment überschreitet aber noch unterhalb eines maximal zulässigen Drehmoments liegt.

Mit dem erfindungsgemäßen Verfahren kann aktiv in sich in Ausführung befindliche Prozessinstanzen eingegriffen werden. So kann beispielsweise in einen konkreten technischen Prozess (z.B. in einem Pasteurisierungsvorgang) eingegriffen werden, wenn der Sensor in dem Überwachungsschritt eine Anomalie (z.B. das Überschreiten der Pasteurisierungstemperatur) feststellt. Mit dem Eingriff in den Prozess kann die Anomalie behoben (z.B. kann die Pasteurisierungsvorrichtung veranlasst werden die zugeführte Wärmeenergie zu reduzieren)

In einer Ausgestaltung der Erfindung werden für jeden Prozessschritt die Prozessdaten während der Ausführung des Prozessschrittes oder am Ende des Prozessschrittes in dem Prozessprotokoll gespeichert.

Die Sensordefinition kann Daten und/oder Anweisungen enthalten, mit denen in dem Überwachungsschritt Prozessinstanzen und/oder Prozesse aus dem Prozessprotokoll selektiert werden, die ein vorbestimmtes Selektionskriterium erfüllen.

Das Selektionskriterium kann
- zumindest ein statischer oder dynamischer Parameter,
- zumindest ein vorbestimmtes Muster, und/oder
- zumindest ein mittels Mustererkennung festlegbarer Parameter
sein, wobei bei einer Abweichung oder bei einer Nicht-Abweichung von dem Selektionskriterium das Selektionskriterium erfüllt ist und ein Abweichen oder Nicht-Abweichen von dem Selektionskriterium indikativ für eine Prozessanomalie ist.

Eine Prozessinstanz kann mehrere Teilprozessinstanzen aufweisen, wobei die Prozessschritte der Teilprozessinstanzen in unterschiedlichen Quellsystemen ausgeführt werden können, und wobei für die bereits ausgeführten Prozessschritte der Teilprozessinstanzen die Prozessdaten in dem zumindest einen Prozessprotokoll zusammengeführt werden.

Einerseits werden so die Prozessdaten in einem zentralen Prozessprotokoll gespeichert, selbst wenn die Teilprozesseinstanzen in unterschiedlichen Systemen ausgeführt werden (z.B. wenn ein Teilprozess eines Montageprozesses mit einer ersten Montagemaschine und ein weiterer Teilprozess dieses Montageprozesses mit einer zweiten Montagemaschine durchgeführt werden).

In einer Ausgestaltung der Erfindung kann die Sensordefinition eine Information darüber umfassen, zu welchen Zeitpunkten der Überwachungsschritt ausgeführt wird. Je nach Bedarf ist so auch eine Echtzeitüberwachung von sich in Ausführung befindlichen Prozessinstanzen möglich.

Es kann vorteilhaft sein, wenn vor dem Überwachungsschritt das Prozessprotokoll gemäß vorbestimmter Filterkriterien gefiltert wird, wobei das gefilterte Prozessprotokoll die Basis für den Überwachungsschritt ist. Damit kann die Menge der zu prüfenden Einträge in dem Prozessprotokoll bei Bedarf reduziert werden, was insbesondere dann von Vorteil ist, wenn das Prozessprotokoll sehr viele Daten (z.B. Prozessdaten zu mehreren hundert Millionen Prozessschritten) aufweist. Die Verarbeitungsgeschwindigkeit kann so erhöht werden.

In einer Ausgestaltung der Erfindung können die in dem Prozessprotokoll gespeicherten Prozessdaten mit weiteren die jeweilige Prozessinstanz und/oder den jeweiligen Prozessschritt beschreibenden Hilfsdaten verknüpfbar sein, wobei beim Erzeugen der Prozesseingriffsinstanz diese mit den Hilfsdaten parametrisiert wird. Damit wird es möglich eine auf die jeweilige Prozessinstanz (für die eine Anomalie behoben werden soll) angepasst Prozesseingriffsinstanz zu erzeugen und die Sensordefinition um nicht in dem Prozessprotokoll gespeicherten Daten zu erweitern.

Die Prozesseingriffsinstanz kann eine Anzahl von nicht-invasiven Aktionen und/oder eine Anzahl von invasiven Aktionen aufweisen, wobei
- die nicht-invasiven Aktionen außerhalb des Quellsystems, in dem die jeweilige Prozessinstanz ausgeführt wird, ausgeführt werden, und
- die invasiven Aktionen in dem Quellsystems, in dem die jeweilige Prozessinstanz ausgeführt wird, ausgeführt werden.

Mit einer invasiven Aktion kann der Ablauf der jeweiligen Prozessinstanz in dem Quellsystem geändert und/oder gesteuert wird.

Die nicht-invasiven Aktionen und/oder die invasiven Aktionen können in für das jeweilige Quellsystem ausführbare Instruktionen umgewandelt werden.

Die Auswahl der zumindest einen generischen Aktion aus der der Prozessanomalie zugeordneten Menge von generischen Aktionen kann derart erfolgen, dass für eine Anzahl der in der Menge von generischen Aktionen enthaltenen Aktionen oder Kombinationen von Aktionen eine Simulation durchgeführt wird, in der ermittelt wird, welche Aktion oder Kombination von Aktionen angewandt auf die Prozessinstanz am besten zu einem vorbestimmten Ergebnis führt, wobei diese Aktion oder Kombination von Aktionen ausgewählt wird. Für mehrere potentiell in Frage kommende Aktionen kann so eine "optimale" Aktion oder Kombination von Aktionen ausgewählt werden. so kann verhindert werden, dass eine Aktion oder eine Kombination von Aktionen an der laufenden Prozessinstanz "getestet" werden müssen.

Das Filterkriterium kann gebildet werden durch zumindest ein Attribut des Prozessprotokolls und die Ausprägungen, die dieses Attribut annehmen kann, wobei die Ausprägungen einem Nutzer zugeordnet sind, wobei über die Zuordnung der Ausprägungen des Attributs zu dem Nutzer die in dem gefilterten Prozessprotokoll auftretenden Prozessanomalien ebenfalls diesem Nutzer zugeordnet sind.

Besonders vorteilhaft ist es, wenn das Prozessprotokoll in einem Arbeitsspeicher eines Computersystems gespeichert wird, vorzugsweise derart, dass aufeinanderfolgende Prozessschritte einer Prozessinstanz in benachbarten Speicherzellen gespeichert werden. Damit kann das Prozessprotokoll als fortlaufender Stream aus dem Speicher ausgelesen werden, d.h. Speicherzelle für Speicherzelle. Komplexe Adressierungen oder Adressierungsvorgänge (etwa um Referenzen zwischen aufeinanderfolgende Prozessschritte einer Prozessinstanz abzubilden), die nachteilig für die Performance sind, können so vermieden werden. Wenn bekannt ist, wie viele Speicherzellen von einer Prozessinstanz belegt werden, können diese zudem blockweise ausgelesen werden.

Der Überwachungsschritt kann von einer Anomalie-Detektions-Engine und der Korrekturschritt kann von einer Anomalie-Korrektur-Engine ausgeführt werden, wobei
- die Anomalie-Detektions-Engine die Ausführung des Sensors steuert, wobei die Ausführung des Sensors gemäß den in der Sensordefinition angegebenen Zeitpunkten getriggert wird, und
- die Anomalie-Detektions-Engine Informationen über die von dem Sensor detektierten Prozessinstanzen der Anomalie-Korrektur-Engine übergibt.

Die Anomalie-Detektions-Engine und die Anomalie-Korrektur-Engine können in einem Computersystem ausgeführt werden.

### Kurzbeschreibung der Figuren

Einzelheiten und Merkmale der Erfindung sowie konkrete Ausgestaltungen der Erfindung ergeben sich aus der nachfolgenden Beschreibung in Verbindung mit der Zeichnung. Es zeigt:
- Fig. 1: ein Blockdiagramm einer Anomalie-Detektions-Engine;
- Fig. 2: ein Blockdiagramm einer Anomalie-Korrektur-Engine;
- Fig. 3: ein Blockdiagramm der Routing-Engine;
- Fig. 4: ein Blockdiagramm der Prozess-Eingriffs-Engine;
- Fig. 5: ein Blockdiagramm der Benachrichtigungs-Engine;
- Fig. 6: ein Blockdiagramm eines Gesamtsystems der Erfindung;
- Fig. 7: ein konkretes Beispiel einer sich in Ausführung befindlichen Prozessinstanz;
- Fig. 8: ein Blockdiagramm zur Verdeutlichung des grundlegenden erfinderischen Verfahrens; und
- Fig. 9: ein Netzwerk aus Prozessprotokollen, Anomalie-Detektions-Engines und Anomalie-Korrektur-Engines.

### Detaillierte Beschreibung der Erfindung

Mit der Erfindung wird es erstmals möglich, die Ausführung von Prozessinstanzen zu überwachen und während der Ausführung einer Prozessinstanz in diesen einzugreifen, um einen Fehler oder eine Anomalie in dieser Prozessinstanz zu beheben. In diesem Sinne wird auch ein sich in Ausführung befindlicher Prozess als Prozessinstanz diese Prozesses bezeichnet.

Die Behebung des Fehlers oder der Anomalie erfolgt erfindungsgemäß durch Ausführen einer Prozesseingriffsinstanz, die in Abhängigkeit von dem detektierten Fehler oder der Anomalie während der Ausführung der Prozessinstanz erzeugt wird. Mit einer solchen Prozesseingriffsinstanz kann beispielsweise der weitere Ablauf der Prozessinstanz beeinflusst bzw. gesteuert werden.

Beispielsweise kann in einem Quellsystem, in dem ein Bestellprozess ausgeführt wird, eine Zahlungssperre veranlasst werden, wenn die Rechnung eines Lieferanten vor der Lieferung der bestellten Ware eingeht. Gemäß eines anderen Beispiels kann eine Bestückungsmaschine für Leiterplatten in einem laufenden Bestückungsvorgang veranlasst werden, die Bestückungsreihenfolge der noch zu montierenden Komponenten zu ändern, wenn aufgrund der zuletzt montierten Komponenten ein Überschreiten der maximalen Bestückungsdauer droht.

Eine Prozesseingriffsinstanz enthält demnach eine oder mehrere Anweisungen, die angepasst sind, die entsprechende Prozessinstanz zu ändern oder zu steuern. In dem vorstehenden Beispiel des Bestellprozesses kann diese Anweisung z.B. eine SAP^{®}-Transaktion sein, mit die Zahlungssperre veranlasst wird, wenn der Bestellprozesses in einem SAP^{®}-System ausgeführt wird. In dem Beispiel der Bestückungsmaschine können die Anweisungen von der Bestückungsmaschine interpretierbare Instruktionen sein, die eine entsprechende Änderung der Bestückungsreihenfolge durch die Bestückungsmaschine bewirken.

Erfindungsgemäß können beliebige Arten von Prozessinstanzen überwacht und während der Ausführung Anomalien oder Fehler behoben werden. Insbesondere können
- ausschließlich in einem Computersystem ausgeführte Prozessinstanzen (z.B. Instanzen eines Bestellprozesses oder Instanzen einer Bezahlprozesses),
- ausschließlich durch technische Vorrichtungen ausgeführte Prozessinstanzen (z.B. ein Montageprozess, der durch eine oder mehrere Montagemaschinen ausgeführt wird oder eine Lackiervorgang, der durch einen Lackierroboter ausgeführt wird), und
- Prozessinstanzen, die teilweise in einem Computersystem und teilweise durch technische Vorrichtungen ausgeführt werden (z.B. ein Just-In-Time Produktionsprozess, der einen in einem Computersystem ausgeführten Bestellprozess und einen durch Produktionsmaschinen ausgeführten Produktionsprozess umfasst),
überwacht und während der Ausführung Anomalien oder Fehler behoben werden.

Eine Prozessinstanz umfasst in der Regel mehrere Prozessschritte. So kann eine Instanz eines Bestellprozesses einen Schritt zum Prüfen der Verfügbarkeit eines Produktes, einen Schritt zum Bestellen einer bestimmten Menge des Produktes und einen Schritt zum Empfangen einer Bestellbestätigung umfassen. Eine Instanz eines durch eine Lackiermaschine ausgeführten Lackierprozesses kann einen Schritt zum Anfordern einer bestimmten Farbe aus einem Farblager, einen Schritt zum Auftragen der Farbe auf den Gegenstand und einen Schritt zum Auftragen eines Klarlackes umfassen.

Für die bereits ausgeführten Prozessschritte einer sich in Ausführung befindlichen Prozessinstanz werden Prozessdaten in einem Prozessprotokoll gespeichert. Neben den im Prozessprotokoll zu speichernden Prozessdaten können bei der Ausführung der Prozessschritte weitere Daten anfallen oder erzeugt werden, die nicht in dem Prozessprotokoll gespeichert werden müssen. Die Prozessdaten und diese weiteren Daten werden in ihrer Gesamtheit Quelldaten genannt. Es kann vorteilhaft sein, die Quelldaten in dem Quellsystem (z.B. in dem Computersystem, in dem ein Bestellprozess ausgeführt wird, oder in einer Montageeinrichtung zugeordneten Speichereirichtung) zu speichern und aus dem Quellsystem die Prozessdaten zu extrahieren und die extrahierten Prozessdaten in dem Prozessprotokoll zu speichern.

Vorteilhaft ist es hierbei, wenn die Prozessdaten in Echtzeit in dem Prozessprotokoll gespeichert werden, d.h. unmittelbar nach der Ausführung des entsprechenden Prozessschrittes. Dadurch wird auch eine Echtzeitüberwachung (oder eine annähernde Echtzeitüberwachung) der Prozessinstanzen möglich, was wiederum ein Eingreifen oder Steuern der Prozessinstanz in Echtzeit ermöglicht. Dies ist insbesondere dann wichtig, wenn die Prozessschritte einer Prozessinstanz in kurzen zeitlichen Abständen ausgeführt werden (etwa in einem Bestückungsprozess, bei dem innerhalb weniger Sekunden eine Vielzahl von Komponenten auf eine Leiterplatte montiert wird).

Das Prozessprotokoll enthält zumindest die Informationen, welche Prozessschritte für welche Objekte (z.B. Bestellungen, Produktionsgüter, Logistikvorgänge, Montageprozesse) zu welchen Zeitpunkten stattgefunden haben, also für jeden Prozessschritt zumindest
- eine Kennung des Prozessschrittes,
- eine Kennung, mit der der Prozessschritt eindeutig einer Prozessinstanz zuordenbar ist, und
- eine Reihenfolge des Prozessschrittes innerhalb der Prozessinstanz.

Die Reihenfolge des Prozessschrittes innerhalb der Prozessinstanz kann beispielsweise durch eine fortlaufende eindeutige Nummer oder durch einen Zeitstempel (etwa der Ausführungszeitpunkt des Prozessschrittes) angegeben werden. Andere Arten, die Reihenfolge anzugeben sind möglich, etwa indem ein Prozessschritt auf seinen nachfolgenden Prozessschritt referenziert.

Zusätzlich können durch das Prozessprotokoll Stammdateninformationen zu den Objekten bzw. Prozessinstanzen bereitgestellt werden, beispielsweise Menge und Preis einer Bestellung, den Produktionstyp eines Gutes, die Transportroute eines Logistikvorgangs, oder Maximaldauer und -Temperatur eines Pasteurisierungsvorganges. Diese Stammdateninformationen können entweder in dem Prozessprotokoll gespeichert werden oder mittels der Kennung des Prozessschrittes bzw. der Kennung der Prozessinstanz referenziert werden. Diese Stammdateninformationen werden auch Hilfsdaten genannt.

Eine Prozessinstanz kann mehrere Teilprozessinstanzen aufweisen, wobei die Prozessschritte der Teilprozessinstanzen in unterschiedlichen Quellsystemen ausgeführt werden können. Beispielsweise kann ein Beschaffungsprozess (= Prozessinstanz) einen Bestellprozess (= erste Teilprozessinstanz) und einen Bezahlprozess (= zweite Teilprozessinstanz) umfassen, wobei der Bestellprozess in einem Bestellsystem und der Bezahlprozess in einem Buchhaltungssystem ausgeführt werden. In einem Produktionsprozess (= Prozessinstanz) können das Schleifen (= erste Teilprozessinstanz) eines Bauteils von einer Schleifmaschine und das Lackieren (= zweite Teilprozessinstanz) des Bauteils von einem Lackierroboter durchgeführt werden.

Die Prozessdaten der ausgeführten Prozessschritte der Teilprozessinstanzen können in separaten Prozessprotokollen gespeichert werden. Vorteilhaft ist es jedoch, wenn die Prozessdaten der Teilprozessinstanzen in einem gemeinsamen Prozessprotokoll gespeichert bzw. zusammengeführt werden.

Die Prozessschritte einer konkreten Prozessinstanz werden nachfolgend auch Prozesspfad genannt. Demnach weist ein Prozessprotokoll mehrere Prozesspfade auf.

Die Prozessdaten werden bei einer in einem Computersystem ausgeführten Prozessinstanz in der Regel von diesem Computersystem bereitgestellt. Das Computersystem in dem eine Prozessinstanz ausgeführt wird, wird auch als Quellsystem bezeichnet. Bei Prozessinstanzen, die von technischen Einrichtungen, etwa Produktionsmaschinen, ausgeführt werden, werden die Prozessdaten in der Regel von der jeweiligen technischen Einrichtung, etwa von Messwertgebern (z.B. von einem Drehmoment- und Drehwinkelsensor eines Verschraubungsprozesses), bereitgestellt. Die technische Einrichtung wird ebenfalls als Quellsystem bezeichnet. Das Quellsystem ist demnach jenes System, das die Prozessinstanz ausführt. Wird eine Prozessinstanz von mehreren Quellsystemen ausgeführt (z.B. eine erste Teilprozessinstanz von Quellsystem A und eine zweite Teilprozessinstanz von Quellsystem B) werden diese Quellsysteme gemeinsam als Quellsystem bezeichnet.

Nachfolgend wird auch der Begriff "Prozessanomalie" verwendet. Eine Prozessanomalie ist ein in einer sich in Ausführung befindlichen Prozessinstanz auftretender Fehler oder ein Ablauf einer Prozessinstanz, der zu unerwünschten Ergebnissen führt oder von einem vorbestimmten Sollprozess abweicht.

Vorteilhaft ist es, wenn das Prozessprotokoll in einem Arbeitsspeicher eines Computersystems gespeichert wird, vorzugsweise derart, dass aufeinanderfolgende Prozessschritte einer Prozessinstanz in benachbarten Speicherzellen gespeichert werden. Die Prozessschritte können so als fortlaufender Stream und in der richtigen Reihenfolge aus dem Arbeitsspeicher ausgelesen werden. Aufwändige Sortierungen können so entfallen.

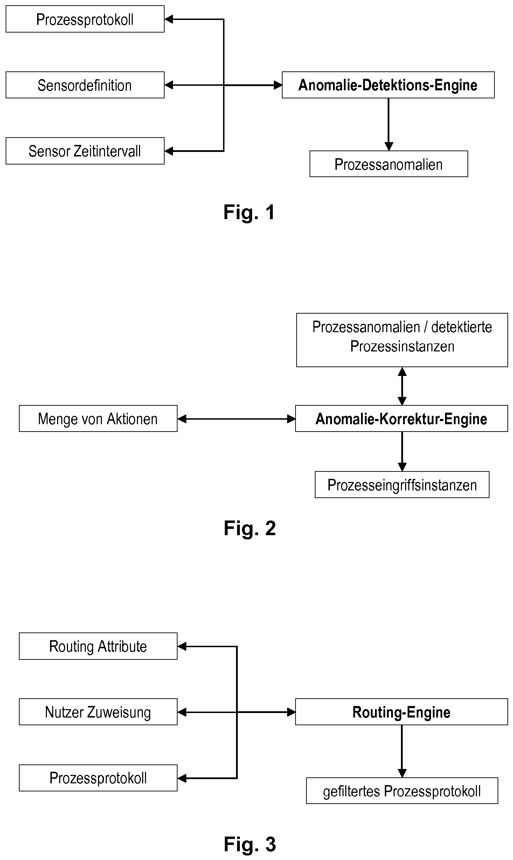

**Fig. 1** zeigt ein Blockdiagramm einer Anomalie-Detektions-Engine zur Verdeutlichung des Teilverfahrens zur Überwachung von sich in Ausführung befindlichen Prozessinstanzen und des Mechanismus zur Entdeckung bzw. Detektion von Prozessanomalien.

Basis für die Anomalie-Detektions-Engine ist das Prozessprotokoll, das gleichzeitig den Dateninput für die Anomalie-Detektions-Engine bildet. Die Anomalie-Detektions-Engine ist angepasst, das Prozessprotokoll zu überwachen und Anomalien in den allen oder in ausgewählten im Prozessprotokoll gespeicherten Prozessinstanzen zu detektieren.

Die Anomalie bzw. Anomalien, die in einem Prozessprotokoll bzw. für Prozessinstanzen in dem Prozessprotokoll aufgespürt werden sollen, werden durch eine oder mehrere Sensordefinition charakterisiert. In einem Überwachungsschritt überwacht ein Sensor der Anomalie-Detektions-Engine unter Verwendung der Sensordefinitionen das Prozessprotokoll hinsichtlich der in den Sensordefinitionen beschriebenen Prozessanomalien. Gleichzeitig detektiert der Sensor Prozessinstanzen oder mehrere Prozessinstanzen umfassende Prozesse, die die in der Sensordefinition beschriebenen Prozessanomalien aufweisen.

Die Sensordefinition kann sich sowohl auf Anomalien / Probleme in Geschäftsprozessen als auch auf Anomalien / Probleme in technischen Prozessen beziehen. Beispielhafte Umfelder im Rahmen von Geschäftsprozessen sind Einkaufsprozesse, Vertriebsprozesse, Abrechnungsprozesse, das IT Service Management, die Webanalytik oder die Stammdatenverwaltung. Beispiele für technische Prozesse umfassen Logistikprozesse, Produktionsprozesse oder Montageprozesse.

Nachfolgend werden Beispiele für verschiedene Klassen von Anomalien wiedergegeben, die mit der erfindungsgemäßen Anomalie-Detektions-Engine überwacht und detektiert werden können, wobei auch weitere Klassen von Anomalien möglich sind.
- Klasse Zeitüberschreitung: Eine Zeitüberschreitung ist dadurch gekennzeichnet, dass eine Aktivität B nicht innerhalb einer vorgegebenen Zeitspanne nach dem Auftreten einer Aktivität A eintritt bzw. ausgeführt wird, d.h. eine vorgegebenen Zeitspanne zwischen zwei Aktivitäten bzw. Prozessschritten einer Prozessinstanz wird überschritten.
   Beispiele:
   - Zur Ausführung eines Produktionsvorganges müssen Rohstoffe bestellt werden. Die Rohstoffe werden nicht innerhalb der vorgegebenen Zeitspanne bestellt, sodass der mit dem Produktionsvorgang verknüpfte Kundenauftrag nicht zum Kundenwunschtermin bedient werden kann.
   - Die vorgeschriebene Erhitzungsdauer bei der Pasteurisierung von Milch wird überschritten.
- Klasse Zeitunterschreitung: Eine Zeitunterschreitung entsteht, wenn eine Mindestzeitdifferenz zwischen zwei Prozessschritten einer Prozessinstanz unterschritten wird.
   Beispiele:
   - Die Gefahrgutlieferung eines Lieferanten tritt vor dem angegebenen Liefertermin ein und führt zu einem Überlauf des Gefahrgutlagers.
   - Die zur Abhärtung von Stahl notwendige Mindestkühldauer im Abschreckungsprozess wird nicht eingehalten.
- Klasse unerlaubtes Prozessmuster: Ein unerlaubtes Prozessmuster ist beispielsweise charakterisiert durch eine unerlaubte chronologische Abfolge von Prozessschritten einer Prozessinstanz oder durch eine unerlaubte Kombination von Prozessparametern mehrerer Prozessschritte einer Prozessinstanz.
   Beispiele:
   - Die Rechnung eines Lieferanten geht vor dem Eingang des bestellten Gutes ein.
   - Die Montagereihenfolge beim maschinengesteuerten Zusammenbau einer Maschine wird nicht eingehalten.
- Klasse Verletzung von Verantwortlichkeiten: Eine Verletzung von Verantwortlichkeiten tritt ein, wenn z.B. zwei unterschiedliche Prozessschritte einer Prozessinstanz unerlaubterweise von derselben Person (oder in technischen Prozessen von demselben Objekt/Maschine) ausgeführt werden.
   Beispiele:
   - Die Freigabe einer Lieferantenrechnung sowie die Zahlung derselben werden von der gleichen Person ausgeführt, sodass das Vier-Augen-Prinzip verletzt wird.
   - Die initiale Montage und die Kontrolle des Radstands beim Fahrzeugbau werden mit dem gleichen Messgerät durchgeführt.

Die vorstehend genannten Klassen von Anomalien und die dazugehörigen Beispiele beziehen sich auf die Erkennung von Anomalien in einzelnen Prozessinstanzen bzw. in einzelnen Prozesspfaden.

Neben der Prozessinstanz-spezifischen Erkennung von Anomalien ermöglicht das erfindungsgemäß Verfahren auch die Überwachung und Detektion von Prozessinstanz-übergreifenden Anomalien. Hierdurch kann für einen Prozess (= Instanzen dieses Prozesses) als Gesamtes ermittelt werden, ob er sich in einem normalen oder nicht normalen Zustand befindet. Folgende Typen von Anomalien können beispielsweise überwacht und detektiert werden.
- Anomalie vom Typ "Häufung": Eine Anomalie vom Typ "Häufung" bezieht sich auf die in zeitlicher Hinsicht ungewöhnliche Anhäufung des Auftretens eines bestimmten Prozessschrittes über mehrere Prozessinstanzen hinweg. Das Attribut "ungewöhnlich" kann sich hierbei entweder auf einen statisch vorgegebenen Referenzwert oder einen dynamisch ermittelten Wert aus der Vergangenheit beziehen.
   Beispiele:
   - Die Absagequote von Kundenaufträgen nimmt ungewöhnlich stark zu.
   - Der Ausschussanteil in einem Produktionsprozess steigt statistisch signifikant an.
- Anomalie vom Typ "Durchlaufzeit": Eine Durchlaufzeitenanomalie beschreibt die ungewöhnliche zeitliche Entwicklung der Durchlaufzeit zwischen zwei Prozessschritten über mehrere Prozessinstanzen hinweg. Mit dem erfindungsgemäßen Verfahren kann eine signifikante Abweichung von einem statischen Referenzwert oder von einem dynamisch ermittelten Referenzwert aus den Durchlaufzeitwerten der Vergangenheit ermittelt werden.
   Beispiele:
   - Der Freigabeprozess (z.B. die Dauer zwischen der Erstellung und Freigabe einer Bestellung) dauert über mehrere Prozessinstanzen hinweg plötzlich ungewöhnlich lange.
   - Die Liegezeit eines Erzeugnisses innerhalb des Produktionssystems nimmt ungewöhnlich hohe Werte an.

Die Sensordefinition weist Daten und/oder Anweisungen auf, mit denen in dem Überwachungsschritt Prozessinstanzen und/oder Prozesse aus dem Prozessprotokoll selektiert werden, die ein vorbestimmtes Selektionskriterium erfüllen. Beispiele für ein vorbestimmtes Selektionskriterium sind vorstehend zu den Klassen von Anomalien bzw. Typen von Anomalien genannten Beispiele.

In dem vorstehend zur Klasse "Zeitüberschreitung" genannten Beispiel der Erhitzungsdauer bei der Pasteurisierung von Milch könnte die Anweisung bzw. das Selektionskriterium der Sensordefinition lauten: "Finde alle Prozessinstanzen des Prozesses 'Pasteurisieren von Milch', bei denen die Erhitzungsdauer in dem Erhitzungsschritt größer als 8 Minuten ist". Die Erhitzungsdauer wird von einem Zeitgeber erfasst und zur Speicherung in dem Prozessprotokoll bereitgestellt. Sobald für eine Prozessinstanz des Prozesses "Pasteurisieren von Milch" der Prozessschritt "Erhitzungsschritt" ausgeführt wurde, wird für diesen Prozessschritt ein entsprechender Eintrag in Prozessprotokoll erzeugt. Die Erhitzungsdauer kann direkt in dem Prozessprotokoll gespeichert werden. Alternativ kann die Erhitzungsdauer für diesen Prozessschritt in einer externen Tabelle gespeichert werden, auf die von dem Prozessprotokoll aus referenziert wird. Direkt nach Erzeugen des entsprechenden Eintrages in dem Prozessprotokoll kann der Sensor der Anomalie-Detektions-Engine, der das Prozessprotokoll gemäß dieser Sensordefinition überwacht, diese Anomalie detektieren und die detektierte Anomalie zur Behebung dieser Anomalie an eine Anomalie-Korrektur-Engine (die weiter unten näher beschrieben wird) übergeben.

Bei dem eben genannten Beispiel der Erhitzungsdauer bei der Pasteurisierung von Milch kann alternativ die Anweisung bzw. das Selektionskriterium der Sensordefinition folgendermaßen lauten: "Finde alle Prozessinstanzen des Prozesses 'Pasteurisieren von Milch', bei denen seit dem Start der Erhitzung mehr als 8 Minuten vergangen sind". Der Start der Erhitzung kann in dem Prozessprotokoll beispielsweise durch einen Zeitstempel angegeben werden. Hierbei wird also die Erhitzungsdauer nicht selbst im Prozessprotokoll gespeichert. Vielmehr überprüft der jeweilige Sensor fortlaufend (z.B. alle 5 Sekunden), ob seit dem Start der Erhitzung die vorgegebenen Erhitzungsdauer (hier 8 Minuten) bereits überschritten wurden.

Diese alternative Sensordefinition hat gegenüber der ersten Sensordefinition den wesentlichen Vorteil, dass bereits während der Ausführung des Erhitzungsschrittes ein Überschreiten der vorgegebenen Erhitzungsdauer detektiert bzw. erkannt werden kann (bei der ersten Sensordefinition hingegen kann erst nach dem Beenden des Erhitzungsschrittes ein überschreiten der vorgegebenen Erhitzungsdauer detektiert werden). Dadurch kann die Anomalie-Korrektur-Engine mittels einer entsprechend Prozesseingriffsinstanz noch in den laufenden Erhitzungsschritt eingreifen und beispielsweise einer Pasteurisierungsvorrichtung Instruktionen zur Verfügung stellen, mit denen die Pasteurisierungsvorrichtung veranlasst wird, den Erhitzungsschritt unverzüglich zu beenden.

Die vorstehend genannten Klassen und Typen von Anomalien für Prozessinstanzen und Prozesse als Gesamtes können erfindungsgemäß in einer Sensordefinition beschrieben werden, d.h. mit Hilfe von Daten und/oder Anweisungen bzw. Selektionskriterien in der Sensordefinition definiert werden.

Hierbei können die drei nachfolgend beschriebenen Arten von Sensordefinitionen vorgesehen werden.
- Sensordefinition für die Anomalie durch Überschreitung / Unterschreitung eines statisch festgelegten Parameters (statischer Sensor): Die oben beschriebenen Beispiele der Prozessinstanz-abhängigen Anomalien können dahingehend in der Sensordefinition berücksichtigt werden, dass ein vorgegebener Parameter (ein Zeitintervall, eine Soll-Abfolge von Prozessaktivitäten, ...) nicht eingehalten wird und die entsprechende Prozessinstanz daher eine Anomalie aufweist.
- Sensordefinition für Anomalien mittels Mustererkennung: Die Anomalien der oben genannten Typen "Häufung" und "Durchlaufzeit" für Prozessinstanz-übergreifende Anomalien stellen Beispiele für eine durch die Erfindung unterstützte Mustererkennung dar. Anhand eines Referenzzeitraums in der Vergangenheit werden typische Muster aus Prozessinstanzen eines Prozesses extrahiert und Abweichung von diesen Mustern in der Beobachtungsperiode können als Prozessanomalie erkannt werden.
   Beispiele:
   - Der Sensor der Anomalie-Detektions-Engine scannt fortlaufend die Quote manueller Eingriffe im Rahmen eines Beschaffungsprozesses (z.B. manuelle Änderungen der Bestellpreise oder -mengen). Ergeben sich in der aktuellen Woche (=Beobachtungsperiode) Ausprägungen, welche signifikant von Höhe und Schwankung der Quote im Referenzzeitraum (z.B. dem vergangenen Jahr) abweichen, wird eine Prozessanomalie detektiert, die durch eine Anomalie-Korrektur-Engine behoben werden kann.
   - In einem Fertigungsprozess wird ein bestimmtes Produkt nach bestimmten Vorgaben hergestellt. Im Vergleich zu den Fertigungsmengen in der Vergangenheit wird durch den Sensor festgestellt, dass die Produktionsmenge in der Beobachtungsperiode plötzlich auffallend niedrig ist. Die Anomalie-Korrektur-Engine kann in den Fertigungsprozess eingreifen, um die Produktionsmenge wieder auf das gewünschte Niveau zu bringen.
- Sensordefinition für Anomalien durch Überschreitung / Unterschreitung eines dynamisch mittels Mustererkennung festgelegten Parameters: In Erweiterung zum oben beschriebenen statischen Sensor ist es erfindungsgemäß möglich den Parameter zur Abgrenzung einer Anomalie dynamisch mittels eines Mustererkennungsprozesses zu bestimmen. Nach Vorgabe eines parametrischen Modells erfolgt die Kalibrierung der Parameter hierbei auf Basis von Mustern in einer Referenzperiode. Die so festgesetzten Parameter können wie beim statischen Sensor als Basis zur Erkennung von Anomalien herangezogen werden.

Nachfolgend wird ein ausführliches Beispiel für eine Sensordefinition bzw. für einen Sensor wiedergegeben.

Betrachten wird eine beispielhafte Sensordefinition, mit der ein Sensor der Anomalie-Detektions-Engine ausstehende Lieferungen aus den USA und Deutschland in einem Prozessprotokoll detektieren kann.

Das Prozessprotokoll, das mindestens eine Kennung der Prozessschritte, eine Kennung, mit der die Prozessschritte eindeutig einer Prozessinstanz zuordenbar sind und eine Reihenfolge der Prozessschrittes innerhalb der Prozessinstanzen aufweist (= Minimalattribute des Prozessprotokolls), wird in diesem Beispiel um Hilfsdaten angereichert, um es dem Sensor zu ermöglichen ausstehende Lieferungen aus den USA und Deutschland zu detektieren. Das Prozessprotokoll enthält damit die Minimalattribute des Prozessprotokolls und die notwendigen Hilfsdaten.

In die Definition der Sensordefinition fließen hier neben den genannten Minimalattributen des Prozessprotokolls auch die Hilfsdaten ein. Sämtliche für dieses Beispiel relevanten Bestandteile werden nachfolgend aufgeführt.
1. Die Minimalattribute des Prozessprotokolls, d.h. die Prozessschritte mit den entsprechenden Zuordnungen zu einer Prozessinstanz und deren Ausführungszeitpunkte werden hier in einer Tabelle "Prozessschritte" gespeichert.

**Tabelle Prozessschritte**

| ID | Prozessschritt | Eintrittszeitpunkt |
|---|---|---|
| 10829382 | Erstelle Bestellposition | 2018-01-03 |
| 10829382 | Erhalte Auftragsbestätigung | 2018-01-04 |
| 10829382 | Bestätigtes Lieferdatum | 2018-01-24 |
| 10182731 | Erstelle Bestellposition | 2018-02-01 |
| 10182731 | Erhalte Auftragsbestätigung | 2018-02-04 |
| 10182731 | Bestätigtes Lieferdatum | 2018-02-05 |
| 10182731 | Erhalte Rechnung | 2018-02-09 |
| 20173621 | Erstelle Bestellposition | 2017-12-02 |
| 20173621 | Erhalte Auftragsbestätigung | 2017-12-08 |
| 20173621 | Bestätigtes Lieferdatum | 2017-12-20 |
| 20173621 | Erhalte Ware | 2017-12-20 |
| 20173621 | Erhalte Rechnung | 2017-12-21 |
| 20173621 | Zahle Rechnung | 2017-12-23 |
| ... | ... | ... |

Die Spalte "ID" kennzeichnet die Prozessinstanz, die Spalte "Prozessschritt" den Prozessschritt innerhalb der Prozessinstanz und die Spalte "Eintrittszeitpunkt" den Zeitpunkt, zu dem der jeweilige Prozessschritt ausgeführt wurde. Durch die Spalte "Eintrittszeitpunkt" ist zudem die Reihenfolge der Prozessschritte innerhalb einer Prozessinstanz festgelegt.
2. Eine Liste aller Bestellungen (die beispielsweise in einer Datenbank in einer Tabelle "Bestellungen" gespeichert sein können), bestehend aus der Kennung der Bestellung (ID = Bestellnummer) und einer Kennung des jeweiligen Lieferanten. Weitere Attribute, die für die Sensordefinition gemäß dieses Beispiels nicht notwendig sind, können vorgesehen sein, etwa die Währung und der Bestellwert.

**Tabelle Bestellungen**

| ID | Lieferant | Nettowert | Währung |
|---|---|---|---|
| 10829382 | 318623 | 1000 | EUR |
| 10182731 | 327462 | 2000 | USD |
| 20173621 | 621531 | 1500 | EUR |
| ... | ... | ... | ... |

3. Informationen zu den Lieferanten. Diese sind für die Einschränkung auf ausstehende Lieferungen aus den USA und Deutschland notwendig und werden in vielen Quellsystemen in Form einer zentralen Stammdatentabelle (hier Tabelle "Lieferanten") bereitgestellt. Diese Tabelle enthält zumindest eine Kennung der Lieferanten und das dem jeweiligen Lieferanten zugeordnete Land. Weitere Attribute, die für die Sensordefinition gemäß dieses Beispiels nicht notwendig sind, können vorgesehen sein, etwa die Telefonnummer des Lieferanten.

**Tabelle Lieferanten**

| Lieferant | Land | Telefonnummer |
|---|---|---|
| 318623 | GER | ... |
| 327462 | USA | ... |
| 621531 | GER | ... |
| ... | ... | ... |

Eine mögliche Sensordefinition, mit der ein Sensor der Anomalie-Detektions-Engine ausstehende Lieferungen aus den USA und Deutschland in einem Prozessprotokoll detektieren kann, kann (gemäß eines Pseudocodes) folgendermaßen ausse- hen:

```
           FILTER
           process equals 'Erhalte Auftragsbestätigung'
           and process not equals 'Erhalte Ware'
           and process not equals 'Sende Mahnung'
           and "Lieferanten"."Land" IN ('USA', 'GER')
           and DAYS_BETWEEN
                (
                    PU_MAX("Bestellungen", "Prozessschritte" . "Eintrittszeitpun
                    kt", "Prozessschritte" . "Prozessschritt" = 'Bestätigtes Lieferda-
                    tum', TODAY())
                ) >= 7
```

Die Filter-Bedingung (FILTER) untersucht das gesamte Prozessprotokoll auf die angegebenen Kriterien und gibt genau die Bestellungen zurück, bei welchen die Kriterien verletzt sind und somit eine Anomalie aufweisen.

Die drei "process-equals"-Ausdrücke grenzen den Datenbestand ein auf jene Bestellungen, bei welchen die Auftragsbestätigung des Lieferanten bereits erhalten wurde, allerdings noch keine Ware eingegangen ist und keine Mahnung versandt wurde. D.h., das Prozessprotokoll auf offene Bestellungen (im Sinne nicht erfolgter Wareneingänge) reduziert.

Die Bedingungen für die Lieferantenherkunft ("Lieferanten"."Land" IN ('USA', 'GER')) stellt sicher, dass dem gewünschten Anwendungsfall entsprechend nur deutsche und amerikanische Lieferanten berücksichtigt werden. Im Allgemeinen können hier beliebige Attribute des Prozessprotokolls verwendet werden.

Die Bedingung "DAYS_BETWEEN..." gibt schließlich die Anomaliebedingung (in diesem Fall für die Zeitüberschreitung) an. Sobald mindestens sieben Tage zwischen dem Betrachtungszeitpunkt und dem letzten bestätigten Lieferdatum liegen, gilt die Lieferung als verspätet und stellt damit eine Anomalie dar.

Die Funktion PU_MAX ist vorgesehen, um für eine Bestellposition genau das am weitesten in der Zukunft liegende Datum zu ermitteln.

Wird der Sensor der Anomalie-Detektions-Engine mit der vorstehenden Sensordefinition auf das vorstehende Beispiel eines Prozessprotokolls angewandt, so ergeben sich zum Betrachtungszeitpunkt 12.02.2018 (z.B. Ausführungszeitpunkt des Sensors) Anomalien für die Bestellungen 10829382 (19 Tage Verspätung) und 10182731 (sieben Tage Verspätung). Die Bestellung 20173621 stellt hingegen keine Anomalie dar, da unter anderem die Ware bereits erhalten wurde und die Bedingung "process not equals 'Erhalte Ware' " somit nicht erfüllt ist.

Der Sensor selbst kann zu fest vorgegebenen Zeitpunkten ausgeführt werden, z.B. zyklisch alle zwei Tage, oder jeden Montag und Mittwoch. Alternativ kann die Ausführung des Sensors durch einen Eintrag in die Tabelle "Prozessschritte" getriggert werden, d.h. sobald dieser Tabelle ein neuer Eintrag hinzugefügt wird, wird der Sensor ausgeführt. Das Triggern des Sensors durch das Hinzufügen eines Eintrages in das Prozessprotokoll kann dann vorteilhaft sein, wenn eine Detektion von Anomalien in Echtzeit oder nahezu in Echtzeit benötigt wird, um auch in Echtzeit detektierte Anomalien beheben zu können.

In die Sensordefinition können beliebige Prozessschritte sowie -attribute eingehen und beliebige Rechenoperationen auf diesen für die Anomaliedetektion ausgeführt werden. Vorstehend ist ein Beispiel für einen Bestellprozess wiedergegeben. Entsprechende Sensordefinitionen können auch für technische Prozesse (z.B. Fertigungsprozesse) festgelegt werden. Die Möglichkeiten für die Sensordefinition sind letztlich nur durch die in dem Prozessprotokoll gespeicherten Daten begrenzt.

So kann beispielsweise eine Sensordefinition für einen Lackierprozess in der Automobilindustrie definiert werden, in dem Bauteile mit einem Lackierroboter lackiert werden. Nach einem Lackiervorgang kann ein Messinstrument die aufgetragene Lackdicke messen und diesen Messwert für die entsprechende Prozessinstanz (= Lackiervorgang) in dem Prozessprotokoll speichern. Ein entsprechender Sensor der Anomalie-Detektions-Engine kann dieses Prozessprotokoll überwachen und detektieren, wenn auf einem Bauteil eine zu dünne Lackschicht aufgetragen wurde. Die Anomalie-Detektions-Engine kann dann der unten beschriebenen Anomalie-Korrektur-Engine Informationen zu detektierten Prozessinstanzen zur Verfügung stellen, die dann entsprechend angepasste Prozesseingriffsinstanzen erzeugen kann. Mit den Prozesseingriffsinstanzen kann die Anomalie-Korrektur-Engine den Lackierroboter anweisen, eine weitere Lackschicht auf das entsprechende Bauteil aufzutragen. Eine mögliche Sensordefinition für diesen Sensor könnte (gemäß eines Pseudocodes) folgendermaßen lauten:

```
           FILTER
           process equals 'Lackiervorgang abgeschlossen'
           and process not equals 'Bauteil hat Lackierhalle verlassen'
           and "Bauteile"."Lackdicke" < 1,5 mm
```

Ein Sensor gemäß dieser Sensordefinition gibt alle Prozessinstanzen (Lackiervorgänge) zurück, bei denen der Lackiervorgang abgeschlossen ist, die Lackdicke kleiner als 1,5 mm ist und das entsprechende Bauteil die Lackierhalle noch nicht verlassen hat. Die Anomalie-Korrektur-Engine kann dann den Lackierroboter anweisen das Bauteil noch einmal zu lackieren.

Ersetzt man bei der vorstehend genannten Sensordefinition die zweite Bedingung durch
and process equals 'Bauteil hat Lackierhalle verlassen'
dann könnte die Anomalie-Korrektur-Engine eine Transporteinrichtung (z.B. ein Lagerroboter) veranlassen, das Bauteil wieder in die Lackierhalle zu transportieren, um es noch einmal zu lackieren.

Die vorstehend beschriebene Sensordefinitionen und die Anomaliedetektion mit Hilfe eines Sensors basierend auf einem Prozessprotokoll bieten mehrere technische Vorteile, von denen nachfolgend einige aufgeführt sind.
- Durch die Zusammenführung potenziell mehrerer Bestandteile (Minimalattribute des Prozessprotokolls und Hilfsdaten) eines Quellsystems wird es möglich, Sensoren bereitzustellen, die neben der Reihenfolge der Prozessschritte innerhalb einer Prozessinstanz auch weitere Abhängigkeiten zwischen den Prozessschritten berücksichtigen können. Diese Abhängigkeit kann sich sogar über mehrere Prozesse und Prozessarten erstrecken, d.h. ein Sensor kann Abhängigkeiten zwischen Prozessschritten berücksichtigen, die zu Prozessinstanzen unterschiedlicher Prozesse gehören oder die zu unterschiedlichen Prozessinstanzen ein und desselben Prozesses gehören. Beispielsweise können so Produktions-, Logistik- und Vertriebsprozess in einem Unternehmen verknüpft werden, wodurch ein Sensor Anomalien über mehrere Prozessinstanzen hinweg detektieren kann. Beispiel: Eine Anomalie in einem Produktionsprozess (z.B. eine Zeitüberschreitung in einem Fertigungsvorgang) kann mit der Nichtverfügbarkeit eines eigentlich früher reservierten Spediteurs einhergehen, was die Belieferung eines Kunden zu einem bestätigten Termin beeinträchtigen kann. Durch die Definition eines übergreifenden Sensors kann die drohende Verzögerung des Termins bereits zum Zeitpunkt der Produktionsstörung erkannt werden.
- Es können mehrerer Systemlandschaften berücksichtigt werden. Singuläre Anomaliedetektionssysteme sind monosystemisch und daher nur in der Lage, Abweichungen innerhalb einer Systemlandschaft (etwa bei Prozessen bzw. Prozessinstanzen die innerhalb eines bestimmten Systems, z.B. innerhalb eines SAP^{®}-Systems oder innerhalb einer Produktionsanlage ausgeführt werden) aufzuspüren. Mit Hilfe des Prozessprotokolls können Prozesse bzw. Prozessinstanzen, die in unterschiedlichen Systemen ausgeführt werden, zusammengeführt werden und so von einem Sensor überwacht werden. Beispiel: Ein Bestellprozess und ein Fertigungsprozess werden für ein bestimmtes Produkt zeitlich hintereinander ausgeführt und bilden zusammen einen Beschaffungsprozess. Prozessdaten des Bestellprozesses, der in einem SAP-System ausgeführt wird, und Prozessdaten des Fertigungsprozesses, der von einer Fertigungsmaschine ausgeführt wird, werden in einem gemeinsamen Prozessprotokoll gespeichert. Ein Sensor kann so den gesamten Beschaffungsprozess überwachen und Anomalien innerhalb des gesamten Beschaffungsprozesses detektieren, obwohl der Bestellprozesses und der Fertigungsprozesses in unterschiedlichen Systemen ausgeführt werden.
- Ein weiterer technischer Vorteil der Erfindung ergibt sich aus den drei Arten von Sensordefinitionen (statisches parametrisches Modell, Mustererkennung, dynamisches parametrisiertes Modell). Insbesondere die Sensordefinitionen mittels Mustererkennung und mittels eines dynamisch parametrisierten Modells ermöglichen eine automatisierte Anomaliedetektion, die manuell nicht bewerkstelligbar ist, d.h. nur unter Zuhilfenahme des erfindungsgemäßen Computer implementieren Verfahrens möglich ist.
- Ferner können unterschiedliche Sensoren zu einem gesamtheitlichen Signal verdichtet werden und dadurch ein übergeordneter Sensor zur Erkennung fundamentaler Prozessschwächen bereitgestellt werden. Heterogene singuläre Signale aus einzelnen Sensoren können so parallel aufgezeichnet und simultan ausgewertet werden.

Ein übergeordneter Sensor wird auch als Meta-Sensor bezeichnet. Ein Meta-Sensor verwendet als Eingabe bereits vorhandene Sensoren, sodass ein Meta-Sensor als ein Sensor angesehen werden kann, der bereits vorhandene Sensoren überwacht. Dadurch ist es beispielsweise möglich über mehrere Sensoren hinweg Häufungen bestimmter Anomalien zu detektieren, was anhand des folgenden Beispiels näher erläutert wird.

In der Anomalie-Detektions-Engine sind verschiedene einzelne Sensoren definiert, die das Prozessprotokoll hinsichtlich bestimmter Anomalien überwachen und diese Anomalien detektieren, beispielsweise:
- ein Sensor, der die Erhöhung eines Bestellpreises in einer Bestellposition durch den Lieferanten detektiert,
- ein Sensor, der die Verschiebung eines Liefertermins in einer Bestellposition durch den Lieferanten detektiert, und
- ein Sensor, der die Erhöhung der nachgefragten Liefermenge in einem Kundenauftrag durch den Kunden detektiert.

Diesen drei Sensoren ist beispielsweise das Attribut "Materialnummer" gemein, d.h. die Sensoren können bei der Detektion einer entsprechenden Anomalie Daten bereitstellen, die die Materialnummer der entsprechenden Prozessinstanz umfassen. Es kann nun beispielsweise ein Meta-Sensor bereitgestellt werden, der Anomalien vom Typ "Häufung" etwa hinsichtlich der Materialnummer detektiert. Der in diesem Beispiel bereitgestellte Meta-Sensor kann nun detektieren, dass etwa in der laufenden Woche eine Häufung über die einzelnen Sensoren hinweg für ein bestimmtes Material (hier angegeben durch die Materialnummer) eintritt. Diese Häufung kann darauf hindeuten, dass sich eine Knappheit für dieses Material anbahnt.

Der Anomalie-Detektions-Engine, die auch den Meta-Sensor ausführt und steuert, kann nun der Anomalie-Korrektur-Engine Informationen zu der detektierten Häufung bereitstellen. Die Anomalie-Korrektur-Engine kann daraufhin entsprechende Prozesseingriffsinstanzen erzeugen, mit denen beispielsweise ein Warenwirtschaftssystem veranlasst wird aktiv und automatisch den Bestand dieses Material aufzubauen, etwa indem zusätzliches Material bei alternativen Lieferanten bestellt wird.

Derartige Häufungen können nur mittels eines Computersystems erkannt werden, da einerseits eine große Anzahl von Sensoren unterschiedliche Anomalien detektieren können, die alle zu einer bestimmte Häufung beitragen können, und andererseits jeder Sensor eine sehr große Anzahl von Prozessinstanzen detektieren kann, die die bestimmte Häufung jeweils unterschiedlich quantitativ beeinflussen können.

Mit den vorstehend beschriebenen Sensoren und Sensordefinitionen können Anomalien in Prozessinstanzen während der Ausführung der Prozessinstanzen detektiert werden. Eine Anomalie-Detektions-Engine, die den Sensor ausführt übergibt die detektierten Prozessinstanzen oder Informationen zu den detektierten Prozessinstanzen einer Anomalie-Korrektur-Engine, die angepasst ist, die Anomalie bzw. Anomalien in den detektierten Prozessinstanzen zu beseitigen. Die Beseitigung der Anomalie erfolgt hierbei während der Ausführung der jeweiligen detektierten Prozessinstanz, es wird also aktiv in die Prozessinstanz eingegriffen und beispielsweise der weitere Ablauf der Prozessinstanz gesteuert. Ferner übergibt die Anomalie-Detektions-Engine der Anomalie-Korrektur-Engine die Sensordefinition (oder den Sensor), auf dessen Basis der Sensor die Prozessinstanzen detektiert hat.

**Fig. 2** zeigt ein Blockdiagramm einer Anomalie-Korrektur-Engine zur Verdeutlichung des Teilverfahrens zur Korrektur von sich in Ausführung befindlichen Prozessinstanzen. "Korrektur" bedeutet hierbei, dass Anomalien einer Prozessinstanz behoben bzw. beseitigt werden. Die Anomalie-Detektions-Engine und die Anomalie-Korrektur-Engine können hierbei auf unterschiedlichen mit einem Kommunikationsnetzwerk verbundenen Systemen ausgeführt werden.

Die Anomalie-Korrektur-Engine wird so konfiguriert, dass jeder möglichen Sensordefinition bzw. jedem möglichen Sensor eine Menge von generischen Aktionen zugeordnet wird. Die einem Sensor zugeordneten generischen Aktionen können verwendet werden, um die von diesem Sensor detektierten Prozessinstanzen zu "korrigieren".

Nachdem die Anomalie-Korrektur-Engine von der Anomalie-Detektions-Engine eine Prozessinstanz zusammen mit der jeweiligen Sensordefinition bzw. zusammen mit dem jeweiligen Sensor empfangen hat, wird aus der Menge von generischen Aktionen zumindest eine generische Aktion ausgewählt. Enthält die einem Sensor zugeordnete Menge von generischen Aktionen mehrere generische Aktionen kann die Auswahl einer generischen Aktion z.B. auf Basis eines oder mehrerer Attributswerte der jeweiligen Prozessinstanz erfolgen, oder auf Basis einer Simulation, mit der die geeignetste Aktion ermittelt wird, wie weiter unten näher beschrieben wird.

Die generischen Aktionen definieren jeweils eine bestimmte Aktion, mit der eine anomale Prozessinstanz korrigiert werden kann, wobei die Definition der generischen Aktion Quellsystem-unabhängig erfolgt. Beispielsweise wird eine generische Aktion "Mahnung erzeugen" definiert, mit der eine entsprechende Anomalie in einer Prozessinstanz, die in einem SAP^{®}-System ausgeführt wird, oder in einer Prozessinstanz, die in einem Salesforce^{®}-System ausgeführt, behoben werden kann.

Basierend auf der ausgewählten generischen Aktion wird eine für die jeweilige detektierte Prozessinstanz spezifische Prozesseingriffsinstanz erzeugt. Die Prozesseingriffsinstanz ist im Unterscheid zur generischen Aktion Quellsystem-abhängig. Bei dem vorgenannten Beispiel würden für die generische Aktion "Mahnung erzeugen" jeweils unterschiedliche Prozesseingriffsinstanzen für das SAP^{®}-System und für das Salesforce^{®}-System erzeugt werden.

Die Prozesseingriffsinstanz selbst wird wiederum so angepasst, dass sie die Anomalie in der konkreten detektierten Prozessinstanz beheben kann. Diese Anpassung kann beispielsweise über Parameter der Prozesseingriffsinstanz erfolgen, denen Attributswerte der jeweiligen Prozessinstanz, z.B. eine eindeutige Kennung der Prozessinstanz, übergeben werden können. Andere Arten einer solchen Anpassung sind ebenfalls möglich.

Die Prozesseingriffsinstanz wird dann in durch das Quellsystem (in dem die detektierte Prozessinstanz ausgeführt wird) ausführbare Instruktion umgewandelt. Diese Instruktionen werden dann von der Anomalie-Korrektur-Engine an das entsprechende Quellsystem übertragen und dort zur Ausführung gebracht.

In einer Ausgestaltung der Erfindung kann eine Prozesseingriffsinstanz mehrere Aktivitäten umfassen. Diese Aktivitäten werden ebenfalls in durch das Quellsystem ausführbare Instruktion umgewandelt und dann von der Anomalie-Korrektur-Engine an das entsprechende Quellsystem übertragen und dort zur Ausführung gebracht. Diese Ausgestaltung ist insbesondere dann vorteilhaft, wenn zur Behebung der Anomalie einer detektierten Prozessinstanz
- mehrere z.B. voneinander unabhängige Aktivitäten in dem Quellsystem ausgeführt werden müssen, oder
- mehrere Aktivitäten in unterschiedlichen Quellsystemen ausgeführt werden müssen. Beispielsweise kann ein zu dünner Lackauftrag durch einen Lackierroboter zu einer Verzögerung des zugesicherten Liefertermins führen. Die generische Aktion zur Behebung dieser Anomalie könnte "Lackerschritt wiederholen" sein. Basierend auf dieser generischen Aktion wird eine Prozesseingriffsinstanz erzeugt, die eine erste Aktivität und einer zweite Aktivität umfasst. Mit der ersten Aktivität kann der Lackierroboter veranlasst werden, eine zusätzliche Lackschicht aufzutragen. Mit der zweiten Aktivität kann ein ERP-System veranlasst werden, dem Kunden einen neuen Liefertermin mitzuteilen. Für beide Aktivitäten erzeugt die Anomalie-Korrektur-Engine entsprechende Instruktionen und überträgt diese an den Lackierroboter bzw. an das ERP-System.

Erfindungsgemäß sind zwei Arten von Prozesseingriffsinstanzen bzw. von Aktivitäten vorgesehen, nämlich
- nicht-invasive Aktivitäten bzw. Prozesseingriffsinstanzen, und
- invasive Aktivitäten bzw. Prozesseingriffsinstanzen.

Nicht-invasive Aktivitäten bzw. Prozesseingriffsinstanzen beziehen sich auf Aktivitäten, welche außerhalb des betroffenen Quellsystems ausgeführt werden. Erfindungsgemäß können hierbei beliebige Informationen aus dem Prozessprotokoll verwertet werden.

Im Falle des Gefahrgutüberlaufs (siehe obiges Beispiel zur Anomalieklasse Zeitunterschreitung) kann beispielsweise die Warengruppe des den Überlauf verursachenden Materials oder der liefernde Hersteller ermittelt und visualisiert werden.

Neben der statischen Visualisierung von Informationen aus dem Prozessprotokoll unterstützt die Anomalie-Korrektur-Engine auch die dynamische Informationsberechnung. So kann beispielsweise für das Gefahrgutlager unter Zuhilfenahme der bestehenden Liefereinteilungen an die Kunden automatisiert berechnet werden, wann welche Kapazitäten frei werden und wann es somit ohne weiteren Eingriff zu einer Beendigung des Überlaufs kommt.

Ein weiteres Beispiel einer nicht-invasiven Aktivität besteht im Aufruf einer Prozessanalyse, mit der basierend auf dem Prozessprotokoll der gesamte Prozess einer Prozessinstanz visualisiert und ausgewertet werden kann. Zusätzliche Information, etwa Prozesskennzahlen können berechnet und angezeigt werden. Die Anomalie-Korrektur-Engine kann hierzu eine detektierte Anomalie mit einer dem Prozessprotokoll zugehörigen Prozessanalyse verknüpfen, sodass eine Aktivität ausgeführt werden kann, mit der für eine detektierte Anomalie direkt eine Analyse des zugrundeliegenden Prozesses ausgeführt werden kann. Die für die Analyse benötigten Informationen sind in dem Prozessprotokoll (Minimaldaten des Prozessprotokolls und Hilfsdaten) enthalten, wobei die Minimaldaten des Prozessprotokolls und die Hilfsdaten entsprechend miteinander verknüpft sind. Dadurch kann auf einfache Weise das Prozessprotokoll hinsichtlich einer bestimmten Prozessinstanz oder hinsichtlich der Prozessinstanzen eines bestimmten Prozesses gefiltert werden, sodass auch nur die diesen Prozessinstanzen zugehörigen Daten in die Analyse einfließen. Dadurch wird eine einfache Verifikation der detektierten Anomalie ermöglicht.

Invasive Aktivitäten bzw. Prozesseingriffsinstanzen beziehen sich hingegen auf Aktivitäten, welche innerhalb des betroffenen Quellsystems ausgeführt werden und damit Veränderungen in dem Quellsystem triggern, um Anomalien zu beheben oder aktiv Verbesserungen in der ausgeführten Prozessinstanz vornehmen.

Invasive Aktivitäten können Instruktionen umfassen, die
- ausschließlich in einem Computersystem ausgeführt werden,
- ausschließlich durch technische Vorrichtungen (z.B. eine Montagemaschine) ausgeführt werden, oder
- teilweise in einem Computersystem und teilweise durch technische Vorrichtungen ausgeführt werden,
um die jeweilige Anomalie zu beheben.

Bei dem oben genannten Beispiel des unerlaubten Prozessmusters durch Eingang der Rechnung eines Lieferanten vor Eingang der bestellten Ware auf, kann die von der Anomalie-Korrektur-Engine erzeugte Prozesseingriffsinstanz eine invasive Aktivität umfassen, mit der eine Zahlungssperre für die entsprechende Bestellung im Quellsystem (z.B. in einem ERP-System, in dem der Bestellprozess ausgeführt wird) gesetzt wird. Dadurch greift die Anomalie-Korrektur-Engine mit der entsprechenden Prozesseingriffsinstanz in den Ablauf der Prozessinstanz ein.

Bei dem oben genannten Beispiel der nicht eingehaltenen Montagereihenfolge beim Zusammenbau einer Maschine kann die Anomalie-Korrektur-Engine eine Prozesseingriffsinstanz mit einer invasiven Aktivität erzeugen, wobei die invasive Aktivität eine Montagemaschine veranlasst, die Montagereihenfolge der noch zu montierenden Teile zu ändern.

Beim oben genannten Beispiel der Zeitüberschreitung in einem Produktionsvorgang kann mittels einer ersten invasiven Aktivität eine Beschleunigung der nachfolgenden von einer Maschine ausgeführten Produktionsschritte zur rechtzeitigen Fertigstellung getriggert werden. Zusätzlich oder alternativ kann mittel einer zweiten invasiven Aktivität ein ERP-System veranlasst werden, den Spediteur und den Kunden über eine verspätete Lieferung zu informieren. Dies ist aus gleichzeitig ein Beispiel dafür, dass Instruktionen teilweise in einem Computersystem und teilweise durch technische Vorrichtungen ausgeführt werden können.

Bei einem Überlauf eines Gefahrgutlagers kann die Anomalie-Korrektur-Engine eine Prozesseingriffsinstanz erzeugen, mit der eine automatisierte Umschichtung des Lagerbestands oder die vorzeitige Auslieferung gelagerter Gefahrgüter getriggert werden kann, um Zusatzkapazitäten zu schaffen.

Erfindungsgemäß können drei Arten von Prozesseingriffsinstanzen erzeugt werden:
- Statisch generierte Prozesseingriffsinstanzen können sich auf die Wiedergabe von Informationen, welche statisch aus dem der Anomalie zugeordneten Prozessprotokoll gewonnen werden, beschränken. Hierzu zählen beispielsweise das Anzeigen von Attributen der Anomalie, wie beispielsweise der Lieferanten- und Referenzbelegnummer bei einer verspäteten Lieferung, den handelnden Personen bei einer Verletzung der Process Compliance oder der Dauer der Zeitüberschreitung bei einem Pasteurisierungsvorgang.
- Bei dynamisch erzeugten Prozesseingriffsinstanzen werden über das Prozessprotokoll hinausgehende Metainformationen der Anomalie sowie des Quellsystems mit einbezogen. Ein Ergebnis davon ist beispielsweise die Verknüpfung einer Anomalie mit einer dem Prozessprotokoll zugehörigen Prozessanalyse oder die Erzeugung einer im Quellsystem ausführbaren Aktivität (= invasive Aktivität).
- Gemäß einer dritten Art wird für das Erzeugen einer Prozesseingriffsinstanz eine optimale Aktion aus der Menge von generischen Aktionen mittels einer Simulation ermittelt. Beispielsweise kann für alle möglichen generischen Aktionen ermittelt werden, wie sich die Durchlaufzeit einer Prozessinstanz bei Anwendung der Aktionen auf die Prozessinstanz ändert, und jene Aktion zum Erzeugen der Prozesseingriffsinstanz ausgewählt werden, bei der die ermittelte Durchlaufzeit am nahesten an eine Soll-Durchlaufzeit herankommt.

Anknüpfend an das oben genannte Beispiel, bei dem ein Sensor der Anomalie-Detektions-Engine ausstehende Lieferungen aus den USA und Deutschland detektiert, kann eine wünschenswerte Aktion sein, den betroffenen Lieferanten gezielt zu mahnen. Dies ist ein Beispiel für eine dynamisch erzeugte, invasive Aktion, da einerseits Attribute der Anomalie in die Erzeugung der Prozesseingriffsinstanz einfließen, und andererseits eine direkte Ausführung der Prozesseingriffsinstanz (in Form von ausführbaren Instruktionen) und damit eine Änderung im Quellsystem herbeigeführt werden. "Dynamisch" heißt in diesem Fall, dass z.B. Lieferantennummer in die Erzeugung der Prozesseingriffsinstanz einfließt, um gezielt den betroffenen Lieferanten zu mahnen. "Invasiv" heißt, dass die Mahnung direkt im Quellsystem erzeugt wird.

Die vorstehend beschriebenen Prozesseingriffsinstanzen und deren Erzeugung bieten mehrere technische Vorteile, von denen nachfolgend einige aufgeführt sind.
- Die generischen Aktionen können für beliebige Module innerhalb eines Systems und für verschiedene Quellsysteme einheitlich definiert werden. Erst beim ausführen der Prozesseingriffsinstanzen müssen quellsystem-spezifische Instruktionen erzeugt werden, die in einer Ausgestaltung der Erfindung auch von dem Quellsystem selbst erzeugt werden können, wenn die Anomalie-Korrektur-Engine dem Quellsystem die hierfür benötigten Informationen zur Verfügung stellt. Insbesondere Anomalien, die den gleichzeitigen invasiven Eingriff in mehrere Systeme zur Behebung der Anomalie erfordern, stellt dies eine notwendige Voraussetzung für eine aktive Steuerung eines gesamtheitlichen Prozesses dar.
- Einen weiteren Vorteil stellt die beschriebene Verknüpfung einer Anomalie mit einer dem Prozessprotokoll zugehörigen Prozessanalyse dar. Hierdurch wird eine effiziente Methode bereitgestellt, Anomalien gezielt zu untersuchen, deren Prozessfluss im Detail nachzuvollziehen und die geeignetste Handlungsoption auszuwählen.
- Ein weiterer bedeutender technischer Vorteil besteht darin, die geeignetste Aktion mittels einer Simulation zu ermitteln. Dadurch können beispielsweise die Auswirkung verschiedener Anordnungen der Montageabfolge in einem Produktionsprozess oder die Entwicklung des Gefahrgutbestands bei Anpassung der Planlieferzeiten simuliert und die voraussichtlich beste Option ausgewählt werden. Ein manuelles "Ausprobieren" in der sich in Ausführung befindlichen Prozessinstanz ist hingegen nicht möglich.

Gemäß einem weiteren Aspekt der Erfindung kann für eine effektive Prozesssteuerung die Zuweisung der Prozesseingriffsinstanzen an die verantwortlichen und handelnden Bearbeiter vorgesehen sein. Dieser Aspekt der Erfindung wird mit Bezug auf **Fig. 3****,** die ein Blockdiagramm einer Routing-Engine zeigt, näher beschrieben. Aufgabe der Routing-Engine ist es, für einen gegebenen Nutzer das Prozessprotokoll bereits dahingehend einzugrenzen, dass alle darin auftretenden Anomalien mit dem durch den Nutzer zu bearbeitenden Prozessinstanzen übereinstimmen.

Eingehende Parameter der Routing-Engine sind das Prozessprotokoll, ein Zuordnungsattribut (das ein Attribut des Prozessprotokolls sein kann), und Ausprägungen (Werte) des Zuordnungsattributes, welche einem gegebenen Nutzer zugeordnet werden sollen.

Beispiel:
- Für eine Einkaufsposition im Bestellprozess ist ein bestimmter Einkäufer zuständig, welcher über den Materialstamm des Quellsystems dem eingekauften Material zugeordnet ist. In diesem Fall ist das Zuordnungsattribut die Materialnummer und der dem Einkäufer zugeordnete Wert des Zuordnungsattributes die Materialnummer der einzelnen Einkaufsposition.

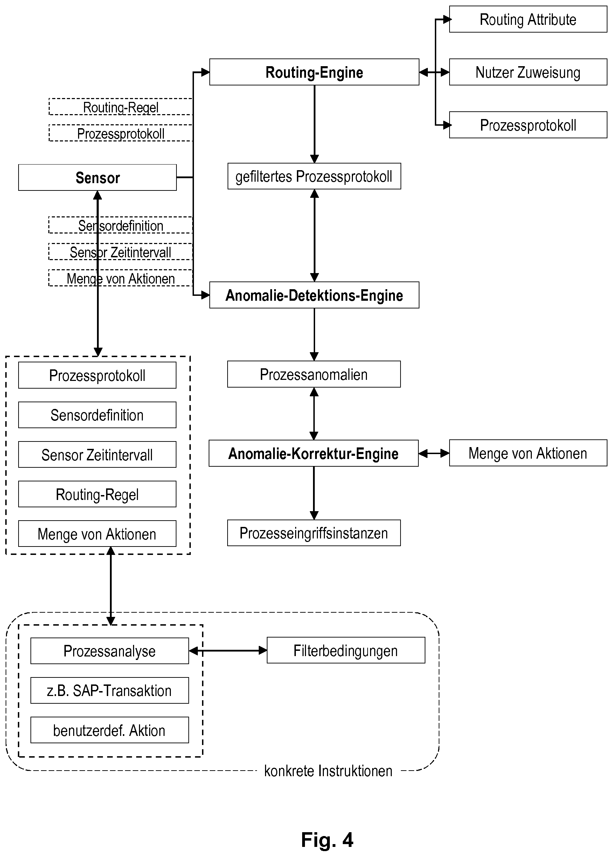

Basierend auf den eingehenden Parametern gleicht die Routing-Engine für einen gegebenen Nutzer das Prozessprotokoll hinsichtlich aller Ausprägungen des Zuordnungsattributs und der dem Nutzer zugewiesenen Ausprägungen ab und gibt jenen Teil des Prozessprotokolls zurück, welcher hinsichtlich der der dem Nutzer zugewiesenen Ausprägungen des Zuordnungsattributes übereinstimmt. Ergebnis ist ein gefiltertes Prozessprotokoll, das von der Anomalie-Detektions-Engine überwacht werden kann (vgl. auch Fig. 4).

Ein technischer Vorteil der Routing-Engine besteht darin, dass die Einschränkung des Prozessprotokolls auf die für den Nutzer relevanten Prozessanomalien automatisiert vorgenommen wird. Eine manuelle Zuordnung ist bei Berücksichtigung der typischerweise extrem hohen Anzahl einzelner Prozessinstanzen (mehrere Millionen) in dem Prozessprotokoll nicht möglich.

Zudem können neben den Attributen des Prozessprotokolls auch Attribute der Anomalie in die Zuweisung einfließen können. Die Zuweisung von Prozessinstanzen mittels der Routing-Engine zu einzelnen Nutzern ist dann vorteilhaft, wenn zwar die Anomalie-Detektions-Engine eine Anomalie behaftete Prozessinstanz detektiert und die Anomalie-Korrektur-Engine eine Prozesseingriffsinstanz erzeugt, die Ausführung der Prozesseingriffsinstanz aber von einem Nutzer bestätigt werden muss. In Fällen, in denen kein Eingriff eines Nutzers notwendig ist, kann auf die Zuordnung zu einem Nutzer auch verzichtet werden.

Gemäß dem obigen Beispiel der Zeitüberschreitung in einem Fertigungsprozess, soll die Zuordnung des Bearbeiters zunächst über die entsprechende Zuweisung im Produktionsauftrag erfolgen. Tritt in der Prozessinstanz keine Verbesserung ein und zögert sich die Fertigstellung weiter hinaus, soll die Zuordnung über ein anderes Attribut erfolgen, mit dem die Prozessinstanz dem Werksleiter zugeordnet wird. Gemäß der Erfindung ist es vorgesehen, dass die Prozessinstanzen auch nach Eingreifen in die Prozessinstanz mittels einer Prozesseingriffsinstanz weiterhin von der Anomalie-Detektions-Engine überwacht werden. Die Anomalie-Detektions-Engine kann so feststellen, ob nach einer Prozesseingriffsinstanz, die von Bearbeiter bestätigt wurde, weiterhin eine Zeitüberschreitung vorliegt.

Zudem kann es vorteilhaft sein, wenn die vorstehend geschilderte Eskalation einer Prozessanomalie als Regel in der Routing-Engine hinterlegt wird.

In einer Ausgestaltung der Erfindung kann es vorteilhaft sein, die Menge der möglichen generischen Aktionen für das Erzeugen der Prozesseingriffsinstanzen von der jeweiligen Eskalationsstufe abhängig zu machen. Beispielsweise kann eine generische Aktion "Maschine abschalten" nur für einen Werksleiter zum Erzeugen einer entsprechende Prozesseingriffsinstanz zur Verfügung gestellt werden, nicht aber einem normalen Mitarbeiter.

Ein weiterer wesentlicher Vorteil der Routing-Engine besteht darin, dass das Prozessprotokoll für die Überwachung durch die Anomalie-Detektions-Engine erheblich reduziert werden kann. Insbesondere bei einer sehr großen Anzahl von Prozessinstanzen (typischerweise mehrere Millionen) kann so eine effiziente Überwachung des Prozessprotokolls gewährleistet werden

**Fig. 4** zeigt ein Blockdiagramm einer Prozess-Eingriffs-Engine, aus dem die Beziehungen der Anomalie-Detektions-Engine, der Anomalie-Korrektur-Engine und der Routing-Engine für einen bestimmten Sensor hervorgehen.

Die Konfiguration eines Sensors zur Identifikation einer bestimmten Prozessanomalie beinhaltet das Prozessprotokoll, die Kriterien (Sensordefinition) der Anomalie, das Zeitintervall der periodischen Überprüfung des Prozessprotokolls auf diese Anomalie, die Zuweisungsregel sowie die festgelegte Menge möglicher Aktionen zur Anomaliebehebung.

Ausgehend von der Sensorkonfiguration erfolgt zunächst die (optionale) Berechnung des gefilterten Prozessprotokolls für einen Nutzer auf Basis der Zuweisungsregel. Dieses gegebenenfalls gefilterte Prozessprotokoll wird dann der Anomalie-Detektions-Engine zur Verfügung gestellt. Die Anomalie-Detektions-Engine überwacht das gefilterte Prozessprotokoll und ermittelt daraus jene Prozessinstanzen, die der Sensordefinition entsprechen, also eine Anomalie gemäß der Sensordefinition aufweisen. Für die ermittelten bzw. detektierten Prozessinstanzen werden in einem weiteren Schritt die Prozesseingriffsinstanzen erzeugt und in den jeweiligen Quellsystemen zur Ausführung gebracht.

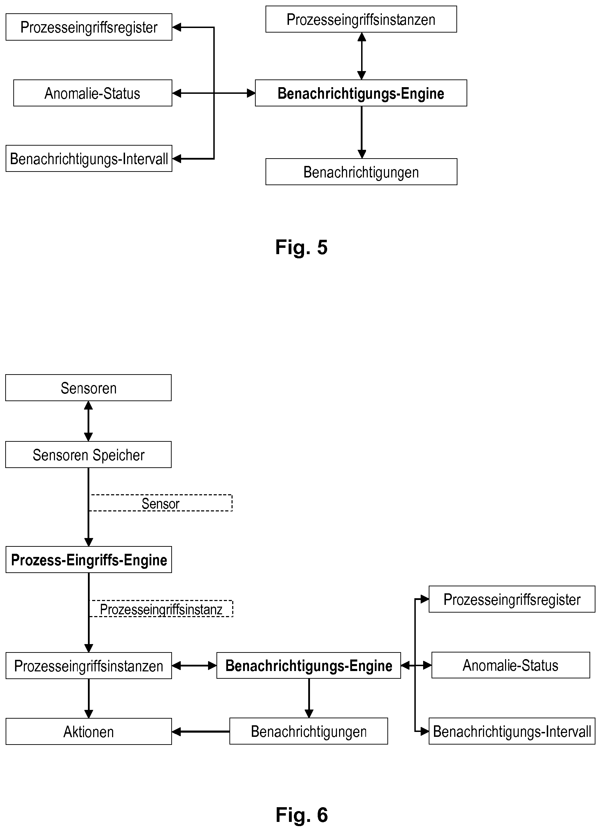

Gemäß einen weiteren Aspekt der Erfindung kann eine Benachrichtigungs-Engine vorgesehen sein, mit der Nutzer über aufgetretene Prozessanomalien (= Prozessinstanzen, die eine Anomie aufweisen) informiert werden können. Ein Blockdiagramm einer Benachrichtigungs-Engine ist in **Fig. 5** gezeigt.

Im Unterschied zur in Fig. 4 gezeigten Prozess-Eingriffs-Engine bezieht sich die Benachrichtigungs-Engine nicht auf einen einzelnen Sensor, sondern bezieht alle Anomalien mit ein, die einem bestimmten Nutzer über verschiedene Sensoren zugeordnet sind. Die Ausgangsbasis für die Benachrichtigung eines Nutzers ist daher die Menge aller ihm zugewiesenen Prozesseingriffsinstanzen (in Fig. 5 mit Process Intervention Store bezeichnet). Diese Menge wird entsprechend der Frequenz des Sensors (Sensorintervall) in der Sensorkonfiguration laufend aktualisiert und die neu entstehenden Anomalien über die Zeit gesammelt.

Neben dem Process Intervention Store spielt das Prozesseingriffsregister eine entscheidende Rolle bei der Benachrichtigung. In dem Prozesseingriffsregister werden die einem Nutzer bereits zum Zeitpunkt der vergangenen Benachrichtigung zugewiesenen Anomalien festgehalten bzw. registriert.

Die Menge neuer, d.h. seit der letzten Benachrichtigung entstanden Anomalien wird durch den Abgleich des Process Intervention Store mit dem Prozesseingriffsregister ermittelt. Die Prozesseingriffsinstanzen, die nicht bereits Teil des Prozesseingriffsregisters sind, werden zudem hinaus fortlaufend auf ihren Status überprüft. Der Status kann hierbei die Gültigkeit einer Anomalie umfassen - wenn eine neue Anomalie vor der nächsten Benachrichtigung behoben wird, kann diese Anomalie wieder aus dem Process Intervention Store entfernt oder als ungültig markiert werden. Alternativ kann für jede in das Prozesseingriffsregister zu übertragende Anomalie überprüft werden, ob diese Anomalie noch besteht. Diese Überprüfung kann mit Hilfe der Anomalie-Detektions-Engine durchgeführt werden. Der Abgleich und der Versand der entsprechenden Benachrichtigung erfolgt zu den im Benachrichtigungsintervall festgelegten Zeiten (z.B. täglich von Montag bis Freitag um 11 und 15 Uhr). Ein Nutzer erhält eine Benachrichtigung mit den gebündelten Anomalien, welche noch nicht Bestandteil des Prozesseingriffsregisters sind und zum Zeitpunkt der Benachrichtigung noch bestehen.

Durch die Entkopplung der Intervalle für die Überprüfung durch die Sensoren der Anomalie-Detektions-Engine und den Versand der Benachrichtigungen kann die Aktualität der Prozesseingriffsinstanzen unabhängig von der Nutzerbenachrichtigung gesteuert werden. Durch die sensorübergreifende Bündelung von Anomalien kann der Nutzer zentralisiert benachrichtigt werden. Mit Hilfe der Berücksichtigung des Status der Anomalien wird gewährleistet, dass der zuständige Bearbeiter nur über tatsächlich bestehenden Anomalien informiert wird.

**Fig. 6** zeigt ein Blockdiagramm eines Gesamtsystems der Erfindung.

Durch das Zusammenwirken der Anomalie-Korrektur-Engine und der Benachrichtigungs-Engine werden Anomalien erkannt und hierfür Prozesseingriffsinstanzen zur Behebung der Anomalien erzeugt, die Benachrichtigungen verschickt und die Anomaliebehebung damit begünstigt.

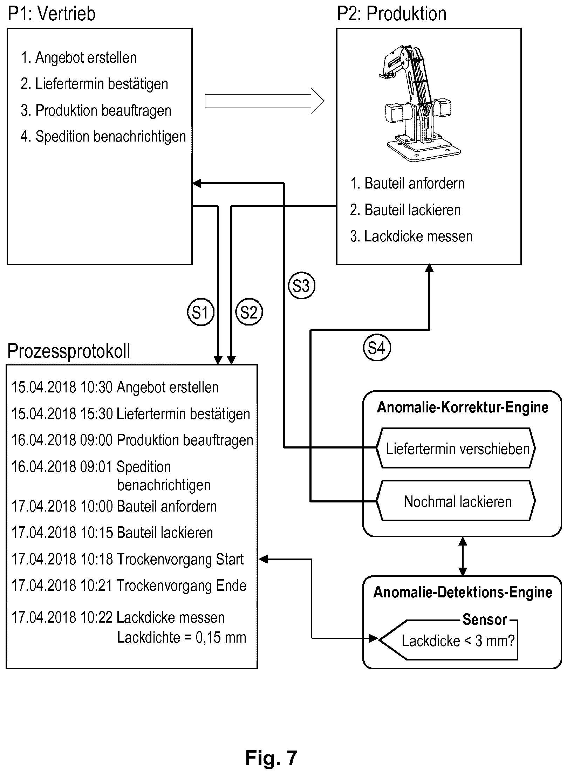

**Fig. 7** zeigt anhand einer konkreten sich in Ausführung befindlichen Prozessinstanz das Zusammenwirken von Quellsystem, Prozessprotokoll, Anomalie-Detektions-Engine und Anomalie-Korrektur-Engine. Die Prozessinstanz umfasst in diesem Beispiel zwei Teilprozessinstanzen P1 und P2.

Bei der Teilprozessinstanz P1 handelt es sich um einen Vertriebsprozess, bei dem hier bereits vier Schritte ausgeführt wurden, nämlich die Schritte "Angebot erstellen", "Liefertermin bestätigen", "Produktion beauftragen" und "Spedition benachrichtigen". Die Teilprozessinstanz P1 wurde in einem ERP-System ausgeführt.

Bei der Teilprozessinstanz P2 handelt es sich um einen Produktionsprozess, bei dem ein bestimmtes vorgefertigtes Bauteil gemäß Kundenwunsch lackiert wird. Bei der Teilprozessinstanz P2 wurden bereits drei Schritte ausgeführt, nämlich "Bauteil anfordern" (z.B. aus einem Bauteilelager), "Bauteil lackieren" (nach dem Lackieren wurde das Bauteil getrocknet), und "Lackdicke messen". Die Teilprozessinstanz P2 wurde von einem Lackierroboter ausgeführt, der entsprechende Sensoren zum Messen der Lackdichte aufweist.

Für die beiden in den Teilprozessinstanzen P1 und P2 ausgeführten Schritte werden entsprechende Einträge in dem Prozessprotokoll erzeugt (Schritte S1 und S2), wobei in Fig. 7 der Einfachheit halber nur der Ausführungszeitpunkt und die Kennung des jeweiligen Prozessschrittes gezeigt sind. Zu dem Schritt "Lackdicke messen" der Teilprozessinstanz P2 wird in dem Prozessprotokoll zusätzlich die gemessene Lackdichte gespeichert. Die Einträge in dem Prozessprotokoll werden vorteilhafterweise direkt nach dem Ausführen der entsprechenden Schritte erzeugt.

Ein Sensor der Anomalie-Detektions-Engine überwacht fortlaufend (z.B. alle zwei Minuten) das Prozessprotokoll. Gemäß dem in Fig. 7 gezeigten Beispiel sieht die Sensordefinition vor, dass der Sensor das Prozessprotokoll darauf hin überwacht, ob innerhalb einer Prozessinstanz ein Schritt "Lackdicke messen" ausgeführt wurde, bei dem die gemessene Lackdicke kleiner als 3 mm ist.

In diesem Beispiel wurde in dem Schritt "Lackdicke messen" eine Lackdicke von 1,5 mm gemessen. Eine Lackdicke von unter 3 mm stellt im Sinne der vorliegenden Erfindung eine Prozessanomalie dar. Der Wert der Mindestlackdicke von 3 mm ist hier fest vorgegeben. Er kann aber auch dynamisch vorgegeben werden, etwa aus den Anforderungen des bestellenden Kunden.

Weil der Sensor die vorstehend genannte Prozessanomalie detektiert hat, ist es erfindungsgemäß vorgesehen, diese Prozessanomalie zu beheben. Hierzu teilt die Anomalie-Detektions-Engine der Anomalie-Korrektur-Engine mit, in welcher Prozessinstanz welche Anomalie aufgetreten ist. In dem Beispiel gemäß Fig. 7 teilt die Anomalie-Detektions-Engine der Anomalie-Korrektur-Engine mit, dass der in dem Prozessprotokoll angegebenen Prozessinstanz eine zu geringe Lackdicke gemessen wurde.

Für diese spezifische Prozessanomalie wählt die Anomalie-Korrektur-Engine aus einer Menge von generischen Aktionen (die in Fig. 7 nicht gezeigt sind) jene generischen Aktionen aus, mit denen diese Prozessanomalie behoben werden kann. In dem vorliegenden Beispiel sind diese die generischen Aktionen "Liefertermin verschieben" und "Nochmal lackieren". Die generische Aktion "Liefertermin verschieben" ist hier deshalb notwendig, da sich durch ein nochmaliges Lackieren des Bauteils die Bereitstellung des Bauteils zur Übergabe an die Spedition verzögert.

Aus den ausgewählten generischen Aktionen erzeugt die Anomalie-Korrektur-Engine Prozesseingriffsinstanzen. Die Prozesseingriffsinstanz "Liefertermin verschieben" wird von der Anomalie-Korrektur-Engine an das ERP-System übergeben (Schritt S3), in dem die erste Teilprozessinstanz P1 ausgeführt wurde. Die Prozesseingriffsinstanz "Nochmal lackieren" wird von der Anomalie-Korrektur-Engine an das Produktionssystem-System (z.B. an den Lackierroboter) übergeben (Schritt S4), in dem die zweite Teilprozessinstanz P2 ausgeführt wurde. Beim Erzeugen der Prozesseingriffsinstanzen aus den generischen Aktionen werden die Prozesseingriffsinstanzen mithilfe einer Anzahl von Parametern angepasst, wobei die Werte der Parameter fest vorgegeben sein können oder beispielsweise in Abhängigkeit von der aktuellen Prozessinstanz gesetzt werden können. So kann die generische Aktion "Liefertermin verschieben" für unterschiedliche Prozessinstanzen unterschiedlicher Prozesse verwendet werden, um einen Liefertermin zu verschieben. In dem vorliegenden Beispiel kann die Anomalie-Korrektur-Engine aus der Dauer für das Lackieren und das Trocknen des Bauteils und aus der Verfügbarkeit des Lackierroboters die Verzögerung der Verfügbarkeit des Bauteils berechnen, und diese Verzögerung (z.B. 36 Stunden) als Parameter der Prozesseingriffsinstanz "Liefertermin verschieben" übergeben.

Die Anomalie-Korrektur-Engine kann die parametrisierten Prozesseingriffsinstanzen direkt an das jeweilige Quellsystem übergeben. Die Quellsysteme können dann die jeweilige Prozesseingriffsinstanz in Instruktionen umwandeln, die von dem jeweiligen Quellsystem ausführbar sind.

Alternativ und in vorteilhafter Weise ist es jedoch vorgesehen, dass die Anomalie-Korrektur-Engine aus den Prozesseingriffsinstanzen entsprechende durch das jeweilige Quellsystem ausführbare Instruktionen erzeugt und diese Instruktionen dann an das jeweilige Quellsystem übergibt. Dies hat den Vorteil, dass die Quellsysteme nicht angepasst werden müssen, um aus den Prozesseingriffsinstanzen ausführbare Instruktionen zu erzeugen. Das Erstellen von Instruktionen aus den Prozesseingriffsinstanzen kann so zentral durch die Anomalie-Korrektur-Engine vorgenommen werden. Die Anomalie-Korrektur-Engine erzeugt die entsprechenden Instruktionen in Abhängigkeit von dem jeweiligen Quellsystem, dem die Instruktionen zur Verfügung gestellt werden sollen.

Die Prozesseingriffsinstanzen bzw. die zugehörigen Instruktionen werden dann von dem jeweiligen Quellsystem ausgeführt. Für die entsprechenden Schritte (gemäß den ausgeführten Instruktionen) können dann wiederum Einträge in dem Prozessprotokoll erzeugt werden (in Fig. 7 nicht gezeigt), die wiederum von dem Sensor der Anomalie-Detektions-Engine überwacht werden können. Für das nochmalige Lackieren könnten so die Einträge "19.04.2018 12:00 Bauteil nochmal lackieren", "19.04.2018 12:30 Trockenvorgang Start", "19.04.2018 12:43 Trockenvorgang Ende" und "19.04.2018 12:32 Lackdicke messen Lackdicke 3,05 mm" in dem Prozessprotokoll erzeugt werden. Da die Lackdicke nunmehr größer als 3 mm ist, gilt die Anomalie gemäß der Sensordefinition des Sensors, der das Prozessprotokoll überwacht, als behoben.

**Fig. 7** zeigt anhand einer konkreten sich in Ausführung befindlichen Prozessinstanz das Zusammenwirken von Quellsystem, Prozessprotokoll, Anomalie-Detektions-Engine und Anomalie-Korrektur-Engine. Die Prozessinstanz umfasst in diesem Beispiel zwei Teilprozessinstanzen P1 und P2.

Bei der Teilprozessinstanz P1 handelt es sich um einen Vertriebsprozess, bei dem hier bereits vier Schritte ausgeführt wurden, nämlich die Schritte "Angebot erstellen", "Liefertermin bestätigen", "Produktion beauftragen" und "Spedition benachrichtigen". Die Teilprozessinstanz P1 wurde in einem ERP-System ausgeführt.

Bei der Teilprozessinstanz P2 handelt es sich um einen Produktionsprozess, bei dem ein bestimmtes vorgefertigtes Bauteil gemäß Kundenwunsch lackiert wird. Bei der Teilprozessinstanz P2 wurden bereits drei Schritte ausgeführt, nämlich "Bauteil anfordern" (z.B. aus einem Bauteilelager), "Bauteil lackieren" (nach dem Lackieren wurde das Bauteil getrocknet), und "Lackdicke messen". Die Teilprozessinstanz P2 wurde von einem Lackierroboter ausgeführt, der entsprechende Sensoren zum Messen der Lackdichte aufweist.

Für die beiden in den Teilprozessinstanzen P1 und P2 ausgeführten Schritte werden entsprechende Einträge in dem Prozessprotokoll erzeugt (Schritte S1 und S2), wobei in Fig. 7 der Einfachheit halber nur der Ausführungszeitpunkt und die Kennung des jeweiligen Prozessschrittes gezeigt sind. Zu dem Schritt "Lackdicke messen" der Teilprozessinstanz P2 wird in dem Prozessprotokoll zusätzlich die gemessene Lackdichte gespeichert. Die Einträge in dem Prozessprotokoll werden vorteilhafterweise direkt nach dem Ausführen der entsprechenden Schritte erzeugt.

Ein Sensor der Anomalie-Detektions-Engine überwacht fortlaufend (z.B. alle zwei Minuten) das Prozessprotokoll. Gemäß dem in Fig. 7 gezeigten Beispiel sieht die Sensordefinition vor, dass der Sensor das Prozessprotokoll darauf hin überwacht, ob innerhalb einer Prozessinstanz ein Schritt "Lackdicke messen" ausgeführt wurde, bei dem die gemessene Lackdicke kleiner als 3 mm ist.

In diesem Beispiel wurde in dem Schritt "Lackdicke messen" eine Lackdicke von 1,5 mm gemessen. Eine Lackdicke von unter 3 mm stellt im Sinne der vorliegenden Erfindung eine Prozessanomalie dar. Der Wert der Mindestlackdicke von 3 mm ist hier fest vorgegeben. Er kann aber auch dynamisch vorgegeben werden, etwa aus den Anforderungen des bestellenden Kunden.

Weil der Sensor die vorstehend genannte Prozessanomalie detektiert hat, ist es erfindungsgemäß vorgesehen, diese Prozessanomalie zu beheben. Hierzu teilt die Anomalie-Detektions-Engine der Anomalie-Korrektur-Engine mit, in welcher Prozessinstanz welche Anomalie aufgetreten ist. In dem Beispiel gemäß Fig. 7 teilt die Anomalie-Detektions-Engine der Anomalie-Korrektur-Engine mit, dass der in dem Prozessprotokoll angegebenen Prozessinstanz eine zu geringe Lackdicke gemessen wurde.

Für diese spezifische Prozessanomalie wählt die Anomalie-Korrektur-Engine aus einer Menge von generischen Aktionen (die in Fig. 7 nicht gezeigt sind) jene generischen Aktionen aus, mit denen diese Prozessanomalie behoben werden kann. In dem vorliegenden Beispiel sind diese die generischen Aktionen "Liefertermin verschieben" und "Nochmal lackieren". Die generische Aktion "Liefertermin verschieben" ist hier deshalb notwendig, da sich durch ein nochmaliges Lackieren des Bauteils die Bereitstellung des Bauteils zur Übergabe an die Spedition verzögert.

Aus den ausgewählten generischen Aktionen erzeugt die Anomalie-Korrektur-Engine Prozesseingriffsinstanzen. Die Prozesseingriffsinstanz "Liefertermin verschieben" wird von der Anomalie-Korrektur-Engine an das ERP-System übergeben (Schritt S3), in dem die erste Teilprozessinstanz P1 ausgeführt wurde. Die Prozesseingriffsinstanz "Nochmal lackieren" wird von der Anomalie-Korrektur-Engine an das Produktionssystem-System (z.B. an den Lackierroboter) übergeben (Schritt S4), in dem die zweite Teilprozessinstanz P2 ausgeführt wurde. Beim Erzeugen der Prozesseingriffsinstanzen aus den generischen Aktionen werden die Prozesseingriffsinstanzen mithilfe einer Anzahl von Parametern angepasst, wobei die Werte der Parameter fest vorgegeben sein können oder beispielsweise in Abhängigkeit von der aktuellen Prozessinstanz gesetzt werden können. So kann die generische Aktion "Liefertermin verschieben" für unterschiedliche Prozessinstanzen unterschiedlicher Prozesse verwendet werden, um einen Liefertermin zu verschieben. In dem vorliegenden Beispiel kann die Anomalie-Korrektur-Engine aus der Dauer für das Lackieren und das Trocknen des Bauteils und aus der Verfügbarkeit des Lackierroboters die Verzögerung der Verfügbarkeit des Bauteils berechnen, und diese Verzögerung (z.B. 36 Stunden) als Parameter der Prozesseingriffsinstanz "Liefertermin verschieben" übergeben.

Die Anomalie-Korrektur-Engine kann die parametrisierten Prozesseingriffsinstanzen direkt an das jeweilige Quellsystem übergeben. Die Quellsysteme können dann die jeweilige Prozesseingriffsinstanz in Instruktionen umwandeln, die von dem jeweiligen Quellsystem ausführbar sind.

Alternativ und in vorteilhafter Weise ist es jedoch vorgesehen, dass die Anomalie-Korrektur-Engine aus den Prozesseingriffsinstanzen entsprechende durch das jeweilige Quellsystem ausführbare Instruktionen erzeugt und diese Instruktionen dann an das jeweilige Quellsystem übergibt. Dies hat den Vorteil, dass die Quellsysteme nicht angepasst werden müssen, um aus den Prozesseingriffsinstanzen ausführbare Instruktionen zu erzeugen. Das Erstellen von Instruktionen aus den Prozesseingriffsinstanzen kann so zentral durch die Anomalie-Korrektur-Engine vorgenommen werden. Die Anomalie-Korrektur-Engine erzeugt die entsprechenden Instruktionen in Abhängigkeit von dem jeweiligen Quellsystem, dem die Instruktionen zur Verfügung gestellt werden sollen.

Die Prozesseingriffsinstanzen bzw. die zugehörigen Instruktionen werden dann von dem jeweiligen Quellsystem ausgeführt. Für die entsprechenden Schritte (gemäß den ausgeführten Instruktionen) können dann wiederum Einträge in dem Prozessprotokoll erzeugt werden (in Fig. 7 nicht gezeigt), die wiederum von dem Sensor der Anomalie-Detektions-Engine überwacht werden können. Für das nochmalige Lackieren könnten so die Einträge "19.04.2018 12:00 Bauteil nochmal lackieren", "19.04.2018 12:30 Trockenvorgang Start", "19.04.2018 12:43 Trockenvorgang Ende" und "19.04.2018 12:32 Lackdicke messen Lackdicke 3,05 mm" in dem Prozessprotokoll erzeugt werden. Da die Lackdicke nunmehr größer als 3 mm ist, gilt die Anomalie gemäß der Sensordefinition des Sensors, der das Prozessprotokoll überwacht, als behoben.

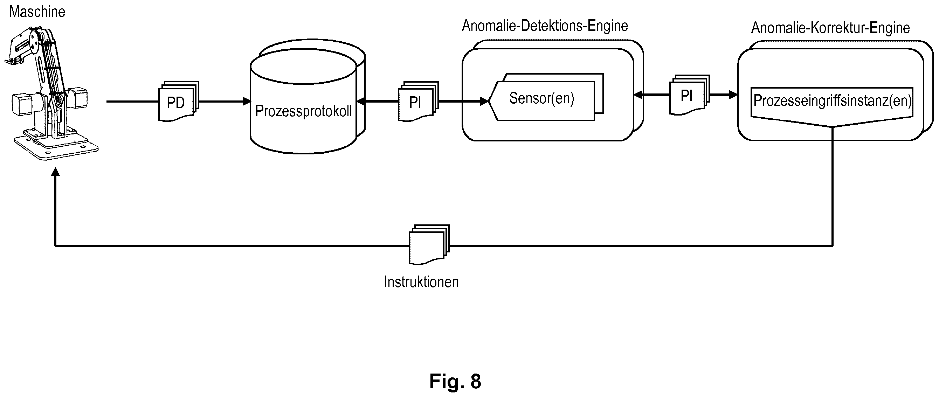

Mit Bezug auf **Fig. 8** werden abschließend die grundlegenden Schritte des erfindungsgemäßen Verfahrens zusammengefasst.

Eine Maschine führt mehrere Schritte z.B. eines Produktionsprozesses aus. Bei der Maschine kann es sich auch um ein Computersystem handeln, in dem bzw. mit dem ein Prozess (z.B. ein Bestellprozess in einem ERP-System) ausgeführt wird. Der von der Maschine ausgeführte Prozess (= Prozessinstanz) kann mehrere Prozessschritte umfassen. Jeder Prozessschritt erzeugt Daten, die als Prozessdaten PD in dem Prozessprotokoll gespeichert werden. Im Falle einer Maschine können diese Daten etwa Sensordaten oder Betriebsparameter umfassen. Die Prozessdaten umfassen neben diesen Daten zumindest eine Kennung der Prozessinstanz und eine Kennung des Prozessschrittes sowie eine Information (z.B. einen Zeitstempel), mit der die Reihenfolge der Prozessschritte einer Prozessinstanz festgelegt wird. Jeder Prozessschritt speichert die Prozessdaten während der Ausführung oder unmittelbar nach der Ausführung.

Das Prozessprotokoll kann in einer Datenbank eines Computersystems gespeichert werden, das über ein Kommunikationsnetzwerk mit der Maschine verbunden ist. Vorteilhaft ist es, wenn die Datenbank in einem Arbeitsspeicher des Computersystems gespeichert wird.

Eine Anomalie-Detektions-Engine steuert einen Sensor (oder mehrere Sensoren), der laufend (oder in bestimmten zeitlichen Abständen) das Prozessprotokoll überwacht und anhand einer oder mehrere Sensordefinitionen fehlerhafte bzw. Anomalie behaftete Prozessinstanzen PI in dem Prozessprotokoll ermittelt. Dadurch, dass die Prozessdaten während der Ausführung oder unmittelbar nach der Ausführung der jeweiligen Prozessschritte in dem Prozessprotokoll gespeichert werden, können fehlerhafte bzw. Anomalie behaftete Prozessinstanzen bereits während der Ausführung der jeweiligen Prozessinstanz detektiert werden, d.h. bevor die Ausführung der jeweiligen Prozessinstanz abgeschlossen ist. In Abhängigkeit von den Zeitintervallen, in denen der Sensor (bzw. die Sensoren) das Prozessprotokoll abfragen, ist sogar eine Detektion von fehlerhaften bzw. Anomalie behafteten Prozessinstanzen in Echtzeit möglich, was wiederum einen Eingriff in die jeweilige Prozessinstanz in Echtzeit ermöglicht, um den Fehler zu beheben bzw. die Anomalie zu beseitigen.

Die Anomalie-Detektions-Engine übergibt die detektierten Prozessinstanzen PI an die Anomalie-Korrektur-Engine. Neben den Daten der detektierten Prozessinstanzen PI kann die Anomalie-Detektions-Engine der Anomalie-Korrektur-Engine noch weitere Daten (Hilfsdaten) übergeben, die die jeweilige Prozessinstanz näher beschreiben. Beispielsweise können diese Daten Information darüber umfassen, für welchen Kunden das von der Maschine bearbeitete Werkstück ist. Diese Hilfsdaten kann die Anomalie-Detektions-Engine aus weitere Datenbanken abfragen und der Anomalie-Korrektur-Engine zur Verfügung stellen.

In einer alternativen Ausgestaltung der Erfindung können diese Hilfsdaten auch von der Anomalie-Korrektur-Engine, z.B. aus weiteren Datenbanken abgefragt werden. Dies ist vorteilhaft, um die Last der Anomalie-Detektions-Engine zu verringern, insbesondere dann, wenn sehr große Prozessprotokolle (beispielsweise mit mehreren hundert Millionen Prozessschritten) möglichst in Echtzeit überwacht werden müssen.

Die Anomalie-Korrektur-Engine erzeugt für die von der Anomalie-Detektions-Engine übergebenen Prozessinstanzen Prozesseingriffsinstanzen, wie oben beschrieben. Diese Prozesseingriffsinstanzen sind so ausgestaltet, dass mit Ihnen die jeweilige sich in Ausführung befindliche Prozessinstanz gesteuert werden kann. Bei dem in Fig. 8 gezeigten Bespiel erzeugt die Anomalie-Korrektur-Engine für jede Prozesseingriffsinstanz eine Instruktion oder mehrere Instruktionen und übergibt diese zur Ausführung an das jeweilige Quellsystem (= in dem die Prozessinstanz ausgeführt wird), das in dem in Fig. 8 gezeigten Beispiel die Maschine ist. Vorteilhaft ist es, wenn die Instruktionen so an das jeweilige Quellsystem angepasst werden, dass sie dort direkt zur Ausführung gebracht werden können. Bei dem in Fig. 8 gezeigten Beispiel kann die Maschine etwa veranlasst werden eine bestimmten Bearbeitungsschritt durchzuführen, mit dem sich der detektierte Fehler beheben bzw. die detektierte Anomalie beseitigen lässt.

Die Anomalie-Detektions-Engine und die Anomalie-Korrektur-Engine können auf demselben Computersystem ausgeführt werden. Alternativ können die Anomalie-Detektions-Engine und die Anomalie-Korrektur-Engine auch auf getrennten, über ein Kommunikationsnetzwerk verbundenen Computersystemen ausgeführt werden.

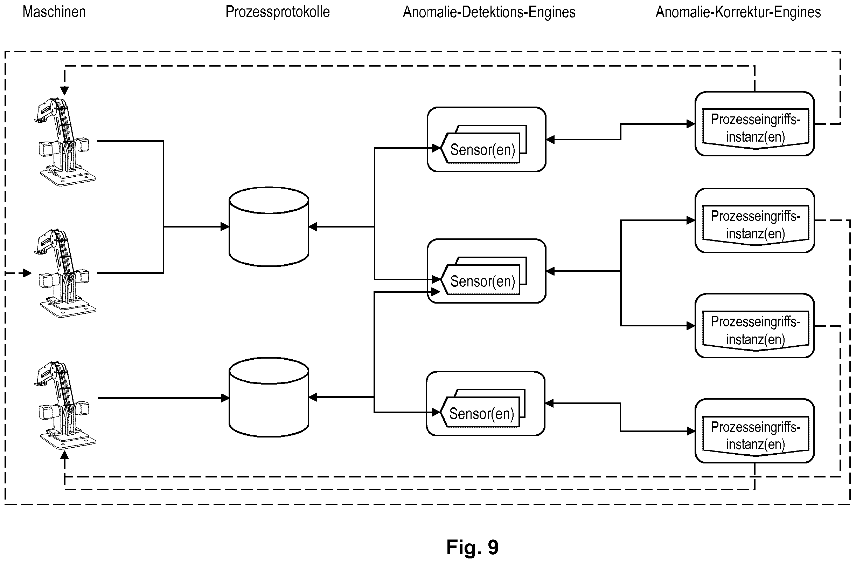

In einer Ausgestaltung der Erfindung können mehrere Prozessprotokolle vorhanden sein, in denen Prozessdaten verschiedener Quellsysteme gespeichert werden. Zudem können mehrere Anomalie-Detektions-Engines (die jeweils mehrere Sensoren steuern können) vorgesehen werden, die unterschiedliche Prozessprotokolle überwachen oder ein Prozessprotokoll gemeinsam überwachen. Ferner können mehrere Anomalie-Korrektur-Engines vorgesehen werden, die jeweils für die Behebung bestimmter Prozessanomalien angepasst sind. In Abhängigkeit der detektierten Prozessanomalie können die Anomalie-Detektions-Engines angepasst sein, die jeweilige detektierte Prozessinstanz an eine entsprechende Anomalie-Korrektur-Engine zu übergeben. Damit kann ein Netzwerk aus Prozessprotokollen, Anomalie-Detektions-Engines und Anomalie-Korrektur-Engines bereitgestellt werden, in dem jeder Konten zur Lösung spezieller Aufgaben ausgebildet ist, wie beispielhaft in Fig. 9 gezeigt.

## Patentansprüche

1. Computer implementiertes Verfahren zur Überwachung von sich in zumindest einem Quellsystem in Ausführung befindlichen Prozessinstanzen und zur Behebung von Prozessanomalien in diesen Prozessinstanzen, wobei jede Prozessinstanz eine Anzahl von Prozessschritte umfasst, wobei für die bereits ausgeführten Prozessschritte Prozessdaten in zumindest einem Prozessprotokoll gespeichert werden, wobei für jeden Prozessschritt die Prozessdaten während der Ausführung des Prozessschrittes in dem Prozessprotokoll gespeichert werden, wobei die Prozessdaten für jeden Prozessschritt zumindest
- eine Kennung des Prozessschrittes,
- eine Kennung, mit der der Prozessschritt eindeutig einer Prozessinstanz zuordenbar ist, und
- eine Reihenfolge des Prozessschrittes innerhalb der Prozessinstanz umfassen, wobei eine Prozessanomalie mit zumindest einer Sensordefinition beschrieben wird, wobei einer Prozessanomalie eine Menge von generischen Aktionen zur Behebung der Prozessanomalie zugeordnet ist, wobei
(a) in einem Überwachungsschritt ein Sensor unter Verwendung der Sensordefinition das Prozessprotokoll hinsichtlich der in der Sensordefinition beschriebenen Prozessanomalie überwacht und Prozessinstanzen detektiert, die die in der Sensordefinition beschriebenen Prozessanomalie aufweisen, und
(b) in einem Korrekturschritt für eine in dem Überwachungsschritt detektierte Prozessinstanz die Prozessanomalie zur Laufzeit dieser Prozessinstanz behoben wird, wobei
- aus der der Prozessanomalie zugeordneten Menge von generischen Aktionen zumindest eine generische Aktion ausgewählt wird,
- basierend auf der ausgewählten generischen Aktion eine für den detektierten Prozess spezifische Prozesseingriffsinstanz erzeugt wird, und
- die Prozesseingriffsinstanz zur Behebung der Prozessanomalie der detektierten Prozessinstanz zur Ausführung gebracht wird.

2. Verfahren nach Anspruch 1, wobei die Sensordefinition Daten und/oder Anweisungen enthält, mit denen in dem Überwachungsschritt Prozessinstanzen aus dem Prozessprotokoll selektiert werden, die ein vorbestimmtes Selektionskriterium erfüllen.

3. Verfahren nach dem vorhergehenden Anspruch, wobei das Selektionskriterium
- zumindest ein statischer oder dynamischer Parameter,
- zumindest ein vorbestimmtes Muster, und/oder
- zumindest ein mittels Mustererkennung festlegbarer Parameter
ist, wobei bei einer Abweichung oder bei einer Nicht-Abweichung von dem Selektionskriterium das Selektionskriterium erfüllt ist und ein Abweichen oder Nicht-Abweichen von dem Selektionskriterium indikativ für eine Prozessanomalie ist.

4. Verfahren nach Anspruch 1, wobei eine Prozessinstanz mehrere Teilprozessinstanzen aufweist, wobei die Prozessschritte der Teilprozessinstanzen in unterschiedlichen Quellsystemen ausgeführt werden können, und wobei für die bereits ausgeführten Prozessschritte der Teilprozessinstanzen die Prozessdaten in dem zumindest einen Prozessprotokoll zusammengeführt werden.

5. Verfahren nach Anspruch 1, wobei die Sensordefinition eine Information darüber umfasst, zu welchen Zeitpunkten der Überwachungsschritt ausgeführt wird.

6. Verfahren nach Anspruch 1, wobei vor dem Überwachungsschritt das Prozessprotokoll gemäß vorbestimmter Filterkriterien gefiltert wird und wobei das gefilterte Prozessprotokoll die Basis für den Überwachungsschritt ist.

7. Verfahren nach Anspruch 1, wobei die in dem Prozessprotokoll gespeicherten Prozessdaten mit weiteren die jeweilige Prozessinstanz und/oder den jeweiligen Prozessschritt beschreibenden Hilfsdaten verknüpfbar sind, wobei beim Erzeugen der Prozesseingriffsinstanz diese mit den Hilfsdaten parametrisiert wird.

8. Verfahren nach dem vorhergehenden Anspruch, wobei die Prozesseingriffsinstanz eine Anzahl von nicht-invasiven Aktionen und/oder eine Anzahl von invasiven Aktionen aufweist, wobei
- die nicht-invasiven Aktionen außerhalb des Quellsystems, in dem die jeweilige Prozessinstanz ausgeführt wird, ausgeführt werden, und
- die invasiven Aktionen in dem Quellsystems, in dem die jeweilige Prozessinstanz ausgeführt wird, ausgeführt werden.

9. Verfahren nach dem vorhergehenden Anspruch, wobei mit einer invasiven Aktion der Ablauf der jeweiligen Prozessinstanz in dem Quellsystem geändert und/oder gesteuert wird.

10. Verfahren nach Anspruch 8, wobei die nicht-invasiven Aktionen und/oder die invasiven Aktionen in für das jeweilige Quellsystem ausführbare Instruktionen umgewandelt werden.

11. Verfahren nach Anspruch 1, wobei die Auswahl der zumindest einen generischen Aktion aus der der Prozessanomalie zugeordneten Menge von generischen Aktionen derart erfolgt, dass für eine Anzahl der in der Menge von generischen Aktionen enthaltenen Aktionen oder Kombinationen von Aktionen eine Simulation durchgeführt wird, in der ermittelt wird, welche Aktion oder Kombination von Aktionen angewandt auf die Prozessinstanz am besten zu einem vorbestimmten Ergebnis führt, wobei diese Aktion oder Kombination von Aktionen ausgewählt wird.

12. Verfahren nach Anspruch 6, wobei das Filterkriterium gebildet wird durch zumindest ein Attribut des Prozessprotokolls und die Ausprägungen, die dieses Attribut annehmen kann, wobei die Ausprägungen einem Nutzer zugeordnet sind, wobei über die Zuordnung der Ausprägungen des Attributs zu dem Nutzer die in dem gefilterten Prozessprotokoll auftretenden Prozessanomalien ebenfalls diesem Nutzer zugeordnet sind.

13. Verfahren nach Anspruch 1, wobei das Prozessprotokoll in einem Arbeitsspeicher eines Computersystems gespeichert wird, vorzugsweise derart, dass aufeinanderfolgende Prozessschritte einer Prozessinstanz in benachbarten Speicherzellen gespeichert werden.

14. Verfahren nach Anspruch 5, wobei der Überwachungsschritt von einer Anomalie-Detektions-Engine und der Korrekturschritt von einer Anomalie-Korrektur-Engine ausgeführt werden, wobei
- die Anomalie-Detektions-Engine die Ausführung des Sensors steuert, wobei die Ausführung des Sensors gemäß den in der Sensordefinition angegebenen Zeitpunkten getriggert wird, und
- die Anomalie-Detektions-Engine Informationen über die von dem Sensor detektierten Prozessinstanzen der Anomalie-Korrektur-Engine übergibt.

## Claims

1. Computer implemented method for monitoring process instances being executed in at least one source system and for eliminating process anomalies in these process instances, wherein each process instance comprises a number of process steps, wherein process data for the already executed process steps are stored in at least one process log, wherein for each process step the process data are stored in the process log during the execution of the process step, wherein the process data for each process step comprise at least
- an identifier of the process step,
- an identifier with which the process step can be clearly assigned to a process instance, and
- a sequence of the process step within the process instance,
wherein a process anomaly is described using at least one sensor definition, wherein a process anomaly is assigned a set of generic actions for eliminating the process anomaly, wherein
(a) in a monitoring step, a sensor, using the sensor definition, monitors the process log for the process anomaly described in the sensor definition and detects process instances that have the process anomaly described in the sensor definition, and
(b) in a correction step for a process instance detected in the monitoring step, the process anomaly is eliminated at the runtime of this process instance, wherein
- at least one generic action is selected from the set of generic actions assigned to the process anomaly,
- based on the selected generic action, a process intervention instance specific to the detected process is generated, and
- the process intervention instance is executed to eliminate the process anomaly of the detected process instance.

2. Method according to claim 1, wherein the sensor definition contains data and/or instructions with which, in the monitoring step, process instances that satisfy a predetermined selection criterion are selected from the process log.

3. Method according to the preceding claim, wherein the selection criterion is
- at least one static or dynamic parameter,
- at least one predetermined pattern, and/or
- at least one parameter that can be determined by means of pattern recognition, wherein in the case of a deviation or non-deviation from the selection criterion, the selection criterion is fulfilled and a deviation or non-deviation from the selection criterion is indicative of a process anomaly.

4. Method according to claim 1, wherein a process instance has a plurality of sub-process instances, wherein the process steps of the sub-process instances can be executed in different source systems, and wherein the process data for the already executed process steps of the sub-process instances are merged in the at least one process log.

5. Method according to claim 1, wherein the sensor definition comprises information about the times at which the monitoring step is executed.

6. Method according to claim 1, wherein prior to the monitoring step, the process log is filtered according to predetermined filter criteria, and wherein the filtered process log is the basis for the monitoring step.

7. Method according to claim 1, wherein the process data stored in the process log can be linked to further auxiliary data describing the relevant process instance and/or the relevant process step, wherein when the process intervention instance is generated, it is parameterized with the auxiliary data.

8. Method according to the preceding claim, wherein the process intervention instance has a number of non-invasive actions and/or a number of invasive actions, wherein
- the non-invasive actions are executed outside the source system in which the relevant process instance is executed, and
- the invasive actions are executed in the source system in which the relevant process instance is executed.

9. Method according to the preceding claim, wherein the sequence of the relevant process instance in the source system is changed and/or controlled with an invasive action.

10. Method according to claim 8, wherein the non-invasive actions and/or the invasive actions are converted into instructions which are executable for the relevant source system.

11. Method according to claim 1, wherein the at least one generic action is selected from the set of generic actions assigned to the process anomaly in such a way that a simulation is carried out for a number of the actions or combinations of actions contained in the set of generic actions, in which simulation it is determined which action or combination of actions applied to the process instance best leads to a predetermined result, wherein this action or combination of actions is selected.

12. Method according to claim 6, wherein the filter criterion is formed by at least one attribute of the process log and the characteristics that this attribute can assume, wherein the characteristics are assigned to a user, wherein, by means of the assignment of the characteristics of the attribute to the user, the process anomalies occurring in the filtered process log are also assigned to this user.

13. Method according to claim 1, wherein the process log is stored in a working memory of a computer system, preferably in such a way that successive process steps of a process instance are stored in adjacent memory cells.

14. Method according to claim 5, wherein the monitoring step is executed by an anomaly detection engine and the correction step is executed by an anomaly correction engine, wherein
- the anomaly detection engine controls the execution of the sensor, wherein the execution of the sensor is triggered according to the times specified in the sensor definition, and
- the anomaly detection engine transfers information about the process instances detected by the sensor to the anomaly correction engine.

## Revendications

1. Procédé mis en œuvre par ordinateur permettant de surveiller des instances de processus en cours d'exécution dans au moins un système source et d'éliminer des anomalies de processus dans lesdites instances de processus, dans lequel chaque instance de processus comprend un certain nombre d'étapes de processus, dans lequel des données de processus sont enregistrées dans au moins un protocole de processus pour les étapes de processus déjà exécutées, dans lequel, pour chaque étape de processus, les données de processus sont enregistrées dans le protocole de processus lors de l'exécution de l'étape de processus, dans lequel les données de processus pour chaque étape de processus comprennent au moins
- un identifiant de l'étape de processus,
- un identifiant, par lequel l'étape de processus peut être associée de manière univoque à une instance de processus, et
- un ordre de l'étape de processus dans l'instance de processus,
dans lequel une anomalie de processus est décrite par au moins une définition de capteur, dans lequel un ensemble d'actions génériques est associé à une anomalie de processus pour l'élimination de l'anomalie de processus, dans lequel
(a) dans une étape de surveillance, un capteur, à l'aide de la définition de capteur, surveille le protocole de processus en ce qui concerne l'anomalie de processus décrite dans la définition de capteur et détecte des instances de processus qui présentent l'anomalie de processus décrite dans la définition de capteur, et
(b) dans une étape de correction, pour une instance de processus détectée dans l'étape de surveillance, l'anomalie de processus est éliminée au moment de l'exécution de ladite instance de processus, dans lequel
- au moins une action générique est sélectionnée parmi l'ensemble d'actions génériques associé à l'anomalie de processus,
- sur la base de l'action générique sélectionnée, une instance d'intervention de processus spécifique au processus détecté est produite, et
- l'instance d'intervention de processus est mise à exécution pour l'élimination de l'anomalie de processus de l'instance de processus détectée.

2. Procédé selon la revendication 1, dans lequel la définition de capteur contient des données et/ou des instructions, à l'aide desquelles, dans l'étape de surveillance, des instances de processus qui satisfont à un critère de sélection prédéterminé sont sélectionnées parmi le protocole de processus.

3. Procédé selon la revendication précédente, dans lequel le critère de sélection est
- au moins un paramètre statique ou dynamique,
- au moins un modèle prédéterminé, et/ou
- au moins un paramètre pouvant être défini à l'aide d'une reconnaissance de modèle, dans lequel, en cas d'écart ou de non-écart par rapport au critère de sélection, le critère de sélection est satisfait et un écart ou un non-écart par rapport au critère de sélection est indicatif d'une anomalie de processus.

4. Procédé selon la revendication 1, dans lequel une instance de processus présente plusieurs sous-instances de processus, dans lequel les étapes de processus des sous-instances de processus peuvent être exécutées dans différents systèmes sources, et dans lequel, pour les étapes de processus déjà exécutées des sous-instances de processus, les données de processus sont combinées dans l'au moins un protocole de processus.

5. Procédé selon la revendication 1, dans lequel la définition de capteur comprend une information concernant les instants auxquels l'étape de surveillance est exécutée.

6. Procédé selon la revendication 1, dans lequel, avant l'étape de surveillance, le protocole de processus est filtré selon des critères de filtrage prédéterminés et dans lequel le protocole de processus filtré est la base de l'étape de surveillance.

7. Procédé selon la revendication 1, dans lequel les données de processus enregistrées dans le protocole de processus peuvent être liées à d'autres données auxiliaires décrivant l'instance de processus respective et/ou l'étape de processus respective, dans lequel, lors de la production de l'instance d'intervention de processus, celle-ci est paramétrée avec les données auxiliaires.

8. Procédé selon la revendication précédente, dans lequel l'instance d'intervention de processus présente un certain nombre d'actions non invasives et/ou un certain nombre d'actions invasives, dans lequel
- les actions non invasives sont exécutées hors du système source dans lequel l'instance de processus respective est exécutée, et
- les actions invasives sont exécutées dans le système source dans lequel l'instance de processus respective est exécutée.

9. Procédé selon la revendication précédente, dans lequel, par une action invasive, le déroulement de l'instance de processus respective dans le système source est changé et/ou commandé.

10. Procédé selon la revendication 8, dans lequel les actions non invasives et/ou les actions invasives sont converties en instructions pouvant être exécutées pour le système source respectif.

11. Procédé selon la revendication 1, dans lequel la sélection de l'au moins une action générique parmi l'ensemble associé à l'anomalie de processus, d'actions génériques est effectuée de telle sorte que, pour un certain nombre d'actions ou de combinaisons d'actions contenues dans l'ensemble d'actions génériques, une simulation est réalisée, dans laquelle il est déterminé quelle action ou combinaison d'actions appliquée à l'instance de processus aboutit au mieux à un résultat prédéterminé, dans lequel ladite action ou combinaison d'actions est sélectionnée.

12. Procédé selon la revendication 6, dans lequel le critère de filtrage est formé par au moins un attribut du protocole de processus et les caractéristiques que ledit attribut peut adopter, dans lequel les caractéristiques sont associées à un utilisateur, dans lequel, par l'intermédiaire de l'association des caractéristiques de l'attribut à l'utilisateur, les anomalies de processus se produisant dans le protocole de processus filtré sont également associées audit utilisateur.

13. Procédé selon la revendication 1, dans lequel le protocole de processus est enregistré dans une mémoire de travail d'un système informatique, de préférence de telle sorte que des étapes de processus successives d'une instance de processus sont enregistrées dans des cellules de mémoire adjacentes.

14. Procédé selon la revendication 5, dans lequel l'étape de surveillance est exécutée par un moteur de détection d'anomalies et l'étape de correction est exécutée par un moteur de correction d'anomalies, dans lequel
- le moteur de détection d'anomalies commande l'exécution du capteur, dans lequel l'exécution du capteur est déclenchée conformément aux instants indiqués dans la définition de capteur, et
- le moteur de détection d'anomalies transmet au moteur de correction d'anomalies des informations concernant les instances de processus détectées par le capteur.
